# EUROPEAN PATENT APPLICATION

(11) **EP 2 857 982 A1**
(43) Date of publication of application: **08.04.2015**
(21) Application number: 13796887.1
(22) Date of filing: 13.05.2013
(51) Int. Cl.: G06F 17/21, G06F 3/01, G06F 3/14

(54) **METHOD FOR DIGITIZING PAPER DOCUMENTS BY USING TRANSPARENT DISPLAY OR DEVICE HAVING AIR GESTURE FUNCTION AND BEAM SCREEN FUNCTION AND SYSTEM THEREFOR**

(30) Priority: 01.06.2012 KR 20120059152; 04.06.2012 KR 20120059704; 28.03.2013 KR 20130033990
(71) Applicant: Jeong, Boyeon, Seoul 151-910 (KR)
(72) Inventor: Jeong, Boyeon, Seoul 151-910 (KR)
(74) Representative: Gulde & Partner
(86) International application number: PCT/KR2013/004201
(87) International publication number: WO 2013/180407

(57) **Abstract**

The present invention relates to a computer interface and to a novel method for improving paper-based information to electronic information. More particularly, the present invention relates to a method for allowing a user to experience virtual reality as if the user manipulated (used) a paper document while directly viewing the paper document by allowing the user to set a specific region on a transparent display (or the paper document) while viewing the paper document displayed through the transparent display (or a beam screen) and by enabling a specific module to be executed for data corresponding to the specific region which has been received over a network. In addition, the present invention relates to a method for displaying additional information related to a specific paper document on the transparent display (or the beam screen) so that the user is able to easily read additional information related to a part which interests the user or a desired part by simply touching an icon corresponding to the part which interests the user while viewing the paper document displayed through the transparent display or by simply touching the desired portion on the beam screen on which the paper document is displayed. Furthermore, the present invention relates to a computer interface for overcoming the limitation of paper-based information and enabling the enormous expandability of information by allowing general users to have production rights for the additional information, thereby enabling the sharing and distribution of various kinds of additional information regarding a paper document for readers reading the same paper document. To this end, the present invention comprises the steps of: (A) allowing, by a user, a system to identify a book identity of a paper document through a client device; (B) adjusting the location of a DIC layer so that the DIC layer matches and overlaps the paper document by the user or under the control of a client system when a transparent display overlaps the paper document (or a part thereof); (C) reproducing (matching or connecting) a raw digital identity matched with the book identity on the DIC layer by the user or under the control of the system without being displayed on a display and/or generating or selecting an extended digital identity (mark up data) matched with the book identity on the system and reproducing the generated or selected extended digital identity (mark up data) by the user or under the control of the system; (D) selecting a specific region (or object) for the digital identity reproduced on the DIC layer under the control of the user and the system and carrying out a specific action on the user system for the selected specific region (or object); and (E) displaying the result from step (D) on the display included in the client device.

## Description

### TECHNICAL FIELD

The present invention relates to a computer interface, and more particularly to a method of capable of extending paper-based information to electronic information. More specifically, the invention relates to a method of allowing a user to experience virtual reality as if the user directly manipulated (used) the paper document as watching the paper document by allowing a user to set a specific area on a transparent display (or paper document) as watching the paper document through the transparent display (or beam screen) and performing a specific module on data corresponding to the specific area acquired via a network. In addition, the invention relates to a method of displaying additional information related to a paper document on a transparent display (or beam screen) and allowing a user to easily read the relevant additional information by merely touching an icon corresponding to a part of interest as watching the paper document through the transparent display or merely touching a desired part in the beam screen projected onto the paper document. Still more particularly, the invention relates to a computer interface capable of overcoming limits of paper-based information and enabling powerful information extension by giving production authority of additional information to users so as to share and distribute a variety of additional information on a paper document between readers who read the paper document.

### BACKGROUND ART

A most typical method of digitizing and utilizing a paper document is to scan the paper document with a scanner which is an external device connected to a user device (computer) with a cable and to utilize (edit, manipulate, search, and the like) the scanned image rendered on a monitor. However, this method has shortcomings that since the paper document and the monitor are separated from each other, a user has to undergo relatively complex processes so as to easily utilize (edit, search, and the like) the paper document and has to move the field of vision between the monitor and the paper document so as to watch the utilization results. It is difficult to carry the scanner which is an external device. In addition, there is a problem in that copyright writings are scanned without any restriction. Accordingly, utilization of copyright writings has been restricted.

A conventional method of digitizing and utilizing a paper document for the purpose of only "search" is a method of directly inputting a specific word or phrase of the paper document to a computer or an electronic dictionary. This method has a merit that a device therefor is easily portable, but has demerits that a user has to directly input spellings and has to move the field of vision between the paper document and the device.

An example of the method of digitizing and utilizing a paper document is a method of utilizing a transparent display having a scanning element disposed in the form of a plane scanner. In this method, the transparent display is overlapped on a paper document, only a desired part of the paper document is scanned, and the scanned image displayed on a display is manipulated through the use of graphic software. This method provides merits that a user's field of vision is not disturbed in comparison with the aforementioned two methods and a user can experience virtual reality in which a paper document is directly manipulated. However, from the viewpoint of a manufacturer, there are demerits that a transparent scanning element has to be mounted on a transparent display and costs thereof are high. From the viewpoint of a user, there are demerits that the display has to be overlapped on each word for scanning in order to search for words on a paper document and thus power is rapidly consumed. Since a document greater than the size of the display cannot be acquired as an image at a time, there is difficulty that complicated synthesization processes (for example, autocorrelation) should be particularly performed later. From the viewpoint of a copyright holder (author, publisher, or the like), this method has demerits that the copyright is not protected because a paper document is scanned to acquire an image.

Another example of the method of digitizing and utilizing a paper document is a method of printing carbon-component code coordinates on a paper book and matching the code coordinates with specific contents. This method has demerits that physical changes have to be given to a publication process for books to be published in the future from the viewpoint of a publisher, demerits that this method cannot be used for books which have been published and distributed and a user cannot know what content a part of a paper book is matched with from the viewpoint of the user. In addition, since a user only has to read the contents which have been unilaterally determined by the producer, there are demerits that a user's participation is restricted and the user only has to be provided with personalized/customized information.

An example of a conventional method of extending a paper document to relevant electronic information thereof is a method of allowing a user to directly input words and the like, which have been selected by the user while watching the paper document, (with a keyboard) to a user device. This method is generally used by a lot of users. In this method, when users want to search for an unknown word or a curious person while reading newspaper, the users have to individually input the words through the use of their devices (such as notebook computers and smart phones) capable of accessing the Internet. This method has not caused great inconvenience to readers reading general documents, but the series of processes of inputting characters including foreign languages to devices are troublesome to learners studying on books including various specialized foreign languages. The existing method of causing a reader to move the field of vision between a paper document and a device lowers the reader's degree of immersion in the paper document, and the output of the user's inputting and searching is not associated with the context of the paper document, which lowers the user's degree of immersion

Another example of the method of extending a paper document to relevant electronic information thereof is a method of printing carbon-component code coordinates on a paper book and matching the code coordinates with specific contents. This method has demerits that physical changes have to be given to a publication process for books to be published in the future from the viewpoint of a publisher and demerits that this method cannot be used for books which have been published and distributed. There are also demerits that a user cannot know what content a part of a paper book is matched with and thus all the parts should be pressed. This method has demerits that the main agent for providing contents is restricted to only a "producer" and thus other readers' opinions and trends cannot be understood. This method has demerits that a user has to merely select contents which have been unilaterally by a producer regardless of the user's interest and concern.

Another example of the method of extending a paper document to relevant electronic information thereof is a method of storing hypertext documents, which have been generated with reference to paper documents, in a specific web server and rendering the hypertext document corresponding to the paper document selected by a user on a transparent display when the user overlaps the transparent display on a specific paper document and fits the edges of the transparent display to the edges of the paper document. However, the hypertext documents provided herein have to be unilaterally produced by a producer and considerable troubles are required for generating the hypertext documents. There are demerits that a system cannot simultaneously grasp other users' trends, cannot arrange and provide information most popular with users, and cannot provide customized information to a user. In this method, by fitting a specific edge of the transparent display to a specific edge (for example, the right edge) of a paper document, the transparent display is matched with the paper document. This method includes factors which cannot be used in reality in consideration that the sizes of paper documents (books) vary from book to book.

In addition, the existing methods are associated with a user merely selecting and reading electronic information provided in advance by producers in relation to paper documents, but do not disclose that a user adds electronic information to a paper document and the added electronic information is shared. That is, in the methods, a user has to directly write or display words on a paper document with a pen or has to directly apply a physical action to the paper document using a post-it and the like, when the user wants to separately add an opinion or idea while watching the paper document. This process is very troublesome to users. There are also demerits that a writing space is insufficient or a book gets dirty, which causes difficulty in reading the book in the future, due to the physical restriction of "paper". This method of directly adding and manipulating additional information to a paper document in the physical world has a problem in that it is difficult to individually arrange and watch generated additional information and has a demerit that it is not possible to read additional information which has been generated by other users having reading the same paper document.

### SUMMARY OF THE INVNETION

### Technical Problem

The invention is made to solve the aforementioned problems and an object thereof is to protect copyrights of paper documents, to allow a user to read secondary processed articles which have been generated using the paper documents, and to allow a user to read and share powerful electronic information related to the paper documents.

More specifically,

A first object of the invention is to reduce realistic restriction that the existing methods of digitizing and utilizing a paper document have to give a "physical change" (such as a plane scanner should be carried by each user or code coordinates should be separately printed on paper documents) and to reduce costs corresponding thereto.

A second object of the invention is to solve a problem with copyrights necessarily accompanied with the existing methods (methods of scanning, digitizing, and utilizing a paper documents).

A third object of the invention is to overcome shutdown and non-personalization properties which are features of secondary processed articles provided to users in the existing methods.

A fourth object of the invention is to recover physical restrictions that the smoothing recognition of a paper document by a device having a plane scanner is restricted to the size of the display.

A fifth object of the invention is to solve realistic problems that an image is broken (or spread) (due to minute movement of a device or a sheet of paper) and that added words (such as scribbles and handwritings) on a paper document are together scanned and thus a clean image of an original document cannot be acquired, which were essential problems in utilizing a scanner for recognizing the paper document.

A sixth object of the invention is to solve inconvenience in that a user has to carry a particular device and has to input keywords in order to solve curiosity while watching a paper document.

A seventh object of the invention is to update and provide electronic information on a specific paper document to a user and to provide suitable (useful) electronic information to the user.

An eighth object of the invention is to allow a user to easily arrange, sort, and personalize additional information

by allowing a user to directly and easily generate (additional) information to be added to a specific paper document on the user's transparent display as well as allowing a user to merely read and consume electronic information on the specific paper document, and to provide powerful information by allowing the generated additional information to be shared by other users having read the same paper document.

A ninth object of the invention is to recover realistic restrictions that the size of a transparent display (or a beam screen) of a user has to be similar (or equal) to the size of a paper document.

### Solution to problem

According to an aspect of the invention,

There is provided a method of digitizing a paper document, the method being used in a transparent display or a user system having an air gesture function and a beam screen function, the method including steps:

(A) causing the user system to identify book identity of the paper document through the use of a user device (client device);

(B) adjusting the position of a DIC layer so as to overlap the DIC layer and the paper document with each other by a user or under the control of the user system in a state in which the transparent display overlaps with the paper document (or a part thereof) or the beam screen is projected onto the paper document;

(C) reproducing (select and prepare or match) raw digital identity, which is a part of digital identity matched with the book identity, on the DIC layer by the user or under the control of the user system in a state in which the raw digital identity is not displayed on the transparent display (or the beam screen)

and/or

generating or selecting and reproducing (select and prepare or match) extended digital identity (markup data), which is a part of the digital identity matched with the book identity, on the DIC layer by the user or under the control of the user system;

(D) selecting a specific area (or object) of the digital identity reproduced (selected and prepared) on the DIC layer by the user or under the control of the user system so as to perform a specific action of the user system; and

(E) displaying the result of the step of (D) on the display of the user device.

### Effect of Invention

In the method of digitizing a paper document according to the invention,

First, a user can easily read electronic information associated with a paper document by only overlapping the transparent display on the paper document and then touching (or dragging) a desired area with a finger while watching the paper document through the transparent display, or only touching (or selecting) an item (highlight, symbol, or other graphic symbols) emitting light on the transparent display. Accordingly, it is possible to solve inconvenience that a user has to move the field of vision to a device in order to search for words (word, sentence, or item), which are selected while watching the paper document, so as not to interfere with the user's immersion in the paper document and to allow the user to read contextual information associated with the paper document, thereby enhancing the user's understanding of the paper document.

Second, the user can easily digitizing a paper document by only performing an intuitive action of directly touching a part, which is wanted to utilize (for example, search a dictionary for) ton he paper document while watching the paper document along with a beam screen projected onto the paper document using a device having an air gesture function or a beam screen function or performing an intuitive action of merely selecting an item displayed (emitting light) on the paper document through the beam screen, and can experience virtual reality as if the user directly manipulate a paper book on which nothing is overlapped.

Third, in the existing methods of providing electronic information associated with a paper document, a user merely reads contents unilaterally produced by a producer. However, according to the invention, since a data provider of a system analyzes user contexts and generates and provides electronic information to correspond to the user's taste (concern, interest, or necessity), the user can always newest information or personalized effective information, the commercially-interested persons including advertisers can provide effective advertisements or services, and the system can provide commercially-usable information to them (commercially-interested persons).

Fourth, only generators of electronic information on paper documents are "producers" in the related art, but each user is allowed to produce additional information (markup) of a paper document in the invention. Accordingly, when a user wants to add additional information to a paper document in the physical world, the user can avoid troublesome processes such as writing words on a book or a notebook, attaching a post-it thereto, or painting with colored pencils and can be allowed to easily arrange and view additional information, which are generated by the user, with desired criteria, thereby providing the additional information in the same way as in the physical world. By allowing other users to share the generated additional information, a user can select and view additional information, which is generated and added to a paper document by other users reading the same paper document, with criteria (such as a desired position on the paper document and a markup generating identifier) desired by the user. Accordingly, in comparison with the existing methods of merely reading additional information unilaterally provided by producers, it is possible to systematically provide powerful information.

Fifth, the configuration for matching a paper document with a DIC layer in the invention can enhance the usefulness of the invention by recovering the existing realistic restriction that the size of the paper document has to be equal/similar to the size of the display (beam screen) and allowing compatibility with any book or device.

Sixth, a user can freely utilize a paper document through only the simple procedure of allowing a device to recognize an identification symbol without performing troublesome processes of scanning paper documents or inputting keywords to a particular device, which is convenient to the user. A producer can reduce realistic difficulty and burden of providing a device with expensive recognition means (for example, a plane scanner or an optical lens) or changing processes of printing a paper book. As a result, the invention is advantageous for both users and producers (system providers).

Seventh, the configuration for performing authentication, security, and payment processes at the same time as performing a specific module on digital identity corresponding to a selected area on a DIC layer in the invention can block the problem with copyrights which has been a serious problem in the related art and can allow fair distribution of copyright writings. As a result, the invention is advantageous for both users and copyright holders.

Eighth, the configuration for adding an extra field (attribute information) to the digital identity at the time of performing a module and storing the extra field in the system allows the system to process contextual powerful information suitable for a user and helps to overcome shutdown and non-personalization properties of secondary processed articles unilaterally provided by the system administrator in the existing methods, thereby achieving powerful information extension and personalization.

Ninth, the configuration using a DIC layer (hereinafter, referred to as layer) as software serving as a coordinate transformation tool allows the device to appropriately grasp an area (a part intended by the user) designated on the paper document through the transparent display even when the size of the display is not equal to the size of the paper document. In comparison with the existing methods (such as a transparent display having a plane scanner) with a restricted size of a display, it is possible to enhance a degree of freedom in size of a display. In other words, the invention can be applied to all paper documents of which the size varies from book to book using all devices of which the size varies from device to device such as mobile phones or tablets. Since the layer allows a device to acquire an image of a paper document larger than the display at a time without performing complicated editing processes, it is possible to avoid troublesome processes of causing a user to perform scanning and synthesization while moving from position to position of a paper document.

Tenth, in comparison with the existing methods of scanning and digitizing a paper document, it is possible to basically prevent a phenomenon that an image is spread or broken. Accordingly, a user does not have to make an intentional effort to control minute movement. It is also possible to solve the problem in that added words (such as scribbles and handwritings) as well as printed words of a paper document are simultaneously scanned at the time of scanning the paper document. As a result, it is possible to allow a device to recognize a clean original document without shake (without a user' particular attention).

### EMBODIMENTS OF THE INVENTION

Specific structural or functional description of the concept of the invention is given merely for describing embodiments of the invention, and the invention can be embodied in various forms and should not be limited to the embodiments.

The invention is made to solve the shutdown property of a paper document due to its physical restrictions, to extend electronic information in various ways, to allow a user to generate electronic information at the same time as reading electronic information, and to allow users to share powerful information.

In the invention, a user designates a specific paper document, causes a device to recognize corresponding book identity and calls data, which has related to the paper document (or on the paper document or with reference to the paper document) and stored in advance (or immediately generated) in a data storage (a memory of a user device or one or more servers connected to a communication network) in a user system, and reproduces the data on a display (or a beam screen) so as to be invisible (transparent), and then the system extracts digital identity corresponding to an area selected byte user and performs a specific module selected by the user or the system thereon when the user directly selects a desired area on a transparent display (or on the paper document when a beam screen is used) while watching the paper document. That is, the invention is characterized in that the user is allowed to directly select an object emitting light on the paper document by displaying additional information (markup data) related to the paper document on the transparent display (or on the paper document when the beam screen is used).

Hereinafter, concepts of terms used in the invention will be first described and then concepts of various methods described in the appended claims will be described in detail. Here, the invention will be described with a focus on a "device having a transparent display", but this description is intended for easily understanding the terms and concepts of the invention but is not intended for limiting the scope of the invention to the "device having a transparent display". That is, it should be noted that since a "device having an air gesture function and a beam screen function" is obvious to those skilled in the art, only the "transparent display" is mentioned in detail in order to prevent excessive elongation of the description.

A "device having an air gesture function and a beam screen function" means a device in which the function of the output unit in a user device including a control unit, an input unit, and an output unit is performed by a "beam screen" and the function of the "input unit" is performed by the "air gesture" function. That is, an image beam output from the device is projected onto a two-dimensional surface (wall, whiteboard, palm, and the like) which can reflect the image beam and a user touches the projected image with a finger, turns over a web page, enlarges or reduces a web page, or the like (like manipulating a display having a touch screen), the device analyzes the reflected light, recognizes the user's gesture, and transmits the recognition result as an input signal to the control unit. This method is known to those skilled in the art and thus detailed description thereof will not be repeated.

### 1. User System

The 'user system" in the invention includes the followings.

### 1-1. Transparent Display or Beam Screen

- A transparent display or a beam screen operates under the control of a user workstation and serves to display results transmitted from the user workstation when the coordinate of a point designated on the transparent display by a user while watching a paper document is sensed (or the coordinate of a point designated on the beam screen projected onto the paper document by the user is sensed through the use of the air gesture function of the device) and is transmitted to the user system.

### 1-2. User Workstation

- The user workstation is used to identity book identity input by a user, to control selecting, accessing, and retrieving of digital identity located in a memory or one or more servers connected to a network and performing of a module, and to control displaying of the received results on the transparent display (or the beam screen). For example, the user workstation includes means for requesting, receiving, and storing digital identity, means for transforming a coordinate value of a point pressed (selected) by a user to coordinate values on a DIC layer, means for identifying digital identity associated with the pressed point, and means for controlling displaying of the received digital identity on the transparent display (or the beam screen). More specifically, the user workstation reads the size of a paper document from document context information stored in a database through the use of the identified book identity and drives a DIC with reference thereto, and the DIC generates a DIC layer with reference to the position of the paper document recognized by the device and the size of the aforementioned paper document. Thereafter, the user workstation performs a specific module located in the memory or in one or more servers connected to a network on specific data of the digital identity associated by the DIC and transmits the results thereof to

the display included in (connected to) the device.

For example, the user workstation can generate identification clues with reference to the size information of the display included in the user terminal, can distribute the generated identification clues so as to allow a user to control the position of the layer, and can control exposure ranges and times of the identification clues in some cases.

Preferably, the user workstation is connected to a communication network that can communication with one or more servers, and a scanned image and a specific module are remotely controlled through the communication network. For example, in order to allow a user to smoothly use the system in an off-line state, all information such as raw data and markup data requested can be downloaded to the memory or other entities included in (connected to) the device when a user device is on-line, and user context information (historical information) accumulated in the off-line state can be uploaded to a specific server in the on-line state.

For example, the user workstation can store digital identity and specific modules in the memory of the device and can locally access the memory, but the raw data and the specific modules may be locally located in the memory of the device or one or more servers and may be sequentially controlled.

For example, the elements may be individually separated and may be coupled to each other via cables, wires, infrared links, radio links, or the like. More specifically, the functions and capacities of the transparent display, a computer, a remote communication device, and the like of the user workstation may be integrated into one device as a whole or partially. Accordingly, in the invention, the terms such as transparent display, user workstation, and user device may mean the same device, and the user device may be a mobile phone, a built-in computer, a network computer, an Internet home appliance, or a radio IP device. Preferably, the user workstation is connected to the Internet and executes a web browser or a dedicated application for the system, and a server connected thereto is a web server. A user device can use a search engine, document sources, a user account service, a markup service, and other network services through the network. The network may be a combined intranet, a public Internet, a mobile phone network, other networks, or combinations thereof.

### 2. Context

The system can provide users with personalized powerful information by analyzing system use history of each user. For this purpose, the system requires information on users and a series of interacting information associated with from a user's log-in operation in the system or a user's authentication operation to an operation of inputting book identity and taking a specific action. The information acquired by the system is referred to as "context" in the general meaning, but information obtained by analyzing and reprocessing the context in the general meaning into information required by the system is included in the range of "context" in the invention. This basic information acquired by the system is referred to as "user/document context information" and information reprocessed by a system service on the basis thereof is referred to as "extended context information". In fact, user context, document context, and extended context are difficult to exactly distinguish from each other, but are defined for the purpose of clear understanding of concepts. Preferably, the system service (data provider) can enhance the functionality thereof using a data mining technique. The generated context information is advantageous for both the system and the user. For example, the system can provide publishers or advertisers with newest interests of users or statistics of popular paper documents, thereby providing materials required for decision making thereof. On the other hand, users can be provided with personalized information more suitable for the users by allowing a search engine itself to treat a part of the context information or reflecting the part of the context information in the search result even when objects corresponding to areas selected by the users are searched for through the use of the search engine. More specifically, for example, the search engine can track an interacting history of a user and cross-refers to the interacting history with an existing keyboard-based inquiry. In this case, the search engine can hold and use more state information than that in most existing search engines for each user and the interactions with the search engine can be extended to more searches for a long period of time than in the typical methods. In addition, the search engine may provide a new action or option suitable for the system as well as simple search for a text (refer to Chapter "Specific Action" for more details).

### 2-1. User Context Information

### 2-1-1. Context of History of Interacting with User System

This chapter relates to a history of a user's interaction with the system. When a user performs a specific action, extra fields (for example, book identity identifier, user identifier, and position and time in digital identity) may be additionally generated. All information sensed by the system, such as a log-in record of each user or a stay time in a specific book, corresponds to the context of history.

### 2-1-2. Real Context of User

The real context of a user includes information from which activity in the real world and personal identity of a user can be grasped such as the age, the geographical location, a serial number of another device, a communication history of a mobile phone, and a mail transmission and reception history.

### 2-1-3. Relevant Digital Context

The relevant digital context includes a history of reading electronic documents in on/off-lines, identifiers of files added to mails, a history of keywords input to a search engine, a history of on-line purchase, and a advertisement watching history.

### 2-2. Document Context Information

The document context information includes all information on documents identified using boot identity in the system.

### 2-2-1. External Context of Document

The external context of documents includes additional information for describing characteristics of book identity input by a user in the real world such as publication dates, titles, author names, ISBN numbers, publishers, categories of books, and the numbers of sold copies.

### 2-2-2. Attribute Information of Document

The attribute information of a document is attribute information (description of an object) of the document as a whole or a specific object in the document. When attribute information (for example, the category of the question, the level of the question, the incorrect answer rate of the question, and the formula used in the question) of a specific question of a mathematics workbook is presented, the system can provide a user with questions of the same category, questions of the similar level, or the like with the attribute information as a clue. The attribute information can be incorporated into or added to digital identity in the system and can be induced by markup data and activated in the system. The attribute information can be generated by someone or a program and the attribute information has to include several columns for describing an object (for example, mathematics question) for use through a specific program of the system.

### 2-3. Extended Context Information

The extended context information is information obtained by causing the system service (data provider) to process the user/document context information. Preferably, the system service is a web service of a web server connected to a user device via a communication network, the user/document context information is located in a database interlinking thereto, and the web service can use the data mining technique. Several examples of the extended context information are as follows.

### 2-3-1. Information Advantageous for System

The system can find out the most popular book, person, thing, and the like on the basis of the history of a user having designated a specific paper document or through the search using a search engine and can predict and generate the type and range of data to be processed and generated by the system.

### 2-3-2. Statistics Advantageous for Third Party

For example, by analyzing the user context information and the document context information of users, "statistics" associated with which person in which regions reads a specific document or purchasing power thereof. This is advantageous for advertisers intending to put an advertisement in a specific paper document or publishers determining next publications on the basis of analysis results.

### 2-3-3. Information Advantageous for User

The system can provide optimized information suitable for each user by analyzing context information of each user and reflecting the context information in the search results of the search engine, and the system can automatically predict a user request by reflecting a user's taste or interest and can provide information helpful to users. For example, the system can estimate a vocabulary level of a user through the use of a selection and search history of words of the user in a specific document and can also estimate a level variation with the lapse of time. Accordingly, the system may generate words or phrases helpful to the user in advance. For example, the system may estimate variations in concern and interest of a user through the identity and the keyword input history of the user and thus may predict future situations of the user so as to execute relevant information or specific transactions.

### 3. Book Identity

The book identity is a term indicating identity unique to a specific paper document and can be considered to be a "name" given for distinguishing a specific document from other documents. More specifically, a paper document generally read by a user is generated by copying original (raw) data on sheets of paper a lot of times and a lot of copied paper documents are completely equal to each other in all aspects such as contents and forms. (The best identification symbol capable of identifying the book identity is an ISBN number. The ISBN number is a resident registration number of a corresponding document which has been given to each existing publication. That is, the ISBN number is the number for distinguishing a specific document from other documents and documents with the same ISBN number are equal to each other in all aspects such as contents, configurations, fonts, and font sizes) Accordingly, the copied paper documents can be treated as documents having the same book identity in the system. That is, the book identity is a name which is given by the system and which is used as means for identifying a paper document by the user system. That is, the book identity is a concept which is like a name given to a specific paper document so as to allow the system to search for extra data corresponding to (matched with) the specific paper document and which is particularly designed for the purpose of convenience of explanation in this description. Therefore, strictly, it should be noted that the name of book identity may not be present in the system or may be present in the system. The concept of book identity in the system indicates means for use to search for matched information and it should be noted that the system does not recognize all context information (attribute information - book title, author, OSBN, publisher, book contents, and the like) of a specific paper document through various methods of causing the system to recognize the book identity. That is, an identification symbol (document contents, book title, barcode, and the like) which a user allows a device to recognize in the user system may be recognized merely as a code or may be used as a pointer in the system and may be used as a tool for searching for information matched therewith. Accordingly, it should be noted that when a user causes the system to recognize book identity using the aforementioned method, it does not mean that all (or partial) information on the corresponding paper document has to be grasped by the system.

### 4. Digital Identity

### 4-1. Raw Digital Identity

### 4-1-1. Raw Data

In the system, raw data means an original scanned image or a data set (group) made to be usable by extracting raw data (texts, images, and the like) and layouts (font sizes, fonts, line spacing, image positions, text positions, and the like) associated therewith. More specifically, the raw data is data on which a module execution command designated with a production tool provided to a user via a display or a system module to be executed under the control of the system is performed. The system can classify purposes of use of a user and can provide a user with data in a data format which can be most easily and smoothly used. When the purpose of data use of a user is only "dictionary search", the digital identity may be a text data set constructed along with position information (context information) of each keyword (text) in a scanned image. When a user wants to execute a "capture" module, an image data set which can reproduce a scanned image may be prepared and data corresponding to a specific area designated by the user can be extracted and provided to the user. In brief, the raw data in the system is a set of objects on which a specific module is executed and generically includes data in the form on which a specific module will be executed. Such data may be a text, a text offset, or a signature including other symbols.

### 4-1-2. Processing Data

The processing data is data generated by executing a specific module of the system service (a data provider such as a web service) of the system on the raw data in advance. In order to avoid a user's waiting until a module execution command is processed after a user gives the module execution command to the user device, the system service performs such a troublesome process instead and matches the results with reference to internal context information (position information) of the document, whereby the processing data is generated. When a user designates a specific area on a layer for the purpose of "dictionary search", the system only has to take a "dictionary search result", that is, "explanation", matched with the specific area designated by the user from the preprocessed data. Alternatively, when a user selects a specific word on the layer while watching a paper document, the system can have a search result value of the corresponding word through the use of a search engine in advance and can immediately display the result value as soon as the user designates the word. Alternatively, the system may predict that a user wants to watch multimedia contents associated with a selected area and may match respective objects with relevant contents. When a user designates "spaghetti" in a cookbook, the system may immediately display a "spaghetti recipe video" matched with the spaghetti by someone (for example, publisher, system administrator, program) without any particular processing.

### 4-2. Extended Digital Identity

The aforementioned two types of digital identity are converted such that a user can easily use an original scanned image in the system, but the "extended digital identity" is completely new data obtained by processing the scanned image and the raw data. More specifically, such data can be generated using various methods by various main agents. For example, a producer may select an arbitrary object using various production menus with reference to a scanned image on a monitor, attach a footnote, voice, a memo pad, and the like including details to be added thereto, and set a link so as to highlight a specific phrase or may display a markup for guiding a specific transaction at a specific position. Similarly, a user may overlap a transparent display on a paper document, match a DIC layer with the paper document, and then generate new data through actions of writing words at an appropriate position, attaching a memo pad thereto, adding a footnote thereto, and the like using a production menu (option) while watching the paper document on a layer through the transparent display. The main agents and methods for generating data with reference to the scanned image may diversify. A representative example of data generated with reference to the scanned image and the paper document is "markup data".

In the invention, things for providing extra functionality associated with a document "with reference to" a scanned image is referred to as "markup".

The markup in the invention does not indicate only things which are generally identified at the time of opening a web page on a web browser, but all additional functionality layers with which a DIC layer is overlaid regardless of routines (for example, web browser and system application) through which the system is embodied are referred to as "markup". The markup can be provided as one or more overlays on the DIC layer.

The "markup" can be generated by a user, an author of a document, a publisher, or the like and can be directly accessed from some sources or can be generated by some services. In many examples, the markup can be generated with reference the paper document and/or the raw digital identity or can be associated therewith. More specifically, the markup can be associated with a specific position or a segment of a text in a document. The "markup" can induce a specific action associated with a document or a part of the document. The markup may include contents which can be read by a person and may be designed to be invisible to a user and/or to be read merely mechanically in some cases. For example, when a user selects a specific position and executes a capturing module while watching a paper document through a transparent display, a pop-up menu may be displayed on the display and may be an example of the markup. The markup data may be added to the raw digital identity or may be built therein.

The markup data may be included in a search result of an inquiry when the system identifies book identity and searches for the matched raw digital identity or may be found out by a particular inquiry in the same search engine or different search engines. The markup data may be found out using the document context information based on the book identity or may be found out using the user context information and the context information of other users. The markup data may be found out at a position specified on the document even when the markup data is not included in the raw digital identity. The markup data may be static and unique to the raw digital identity (hereinafter, referred to as document), similarly to the way in which a link of an html web page in the related art is often built as static data in an html document. However, the markup data may be dynamically generated and/or be applied to a lot of documents.

In the invention, the markup data is a mark which can be identified (or cannot be identified but selected and accessed by the user) by a user on a transparent display regardless of the generation agent or the generation method thereof and indicates a mark which is read and selected to perform a specific function by the user. The markup may be generated using a markup language (for example, html or xml) which is generally used when the system is used on a web browser, or may be generated using a system language (codes) which can be translated by an application, that is, which is predefined, when the system is used on a device in which a dedicated application for the system is installed (regardless of whether the dedicated application is of an on-device type or of a download type). The markup can be produced and distributed by an author, an advertiser, a user, and the like as well as a producer. The system serves to store generated markup data in a data storage of the system and to provide the stored markup data depending on a user's selection, but may reprocess the markup data to generate completely new information, or may grasp a user's taste (concern and interest), generate and select information suitable for the user, and provide the information to the user.

The markup will be described below in more detail.

The markup data in the system is preferably displayed as various identification symbols (highlighting, icons, symbols, and other graphic symbols) on a layer of a transparent display and is identified by a user. The identification symbols are overlapped on appropriate positions (for example, positions to be highlighted) of a paper document located below the transparent display through the transparent display and are identified by a user. The identification symbols are merely read by a user or are accessed through a user's touch.

The markup data may be generated using various methods. The markup data can be generated on a scanned image identified through a monitor, or may be generated using a specific production tool after a transparent display are placed on a paper document and matched with a layer. Alternatively, the markup data may be automatically generated by a program (data provider) produced in advance not by a person. However, at this time, all the markup data should be associated with specific positions or segments of the corresponding document (for example, scanned image and raw data) so as to be appropriately arranged on the user's paper document and to be displayed at appropriate positions. Here, the markup data generated with reference to a document (scanned image) is displayed on a user's layer, but the document (scanned image) should not displayed for copyright protection, and markup data associated with specific positions or segments will be distributed to the specific positions on a DIC layer of the user's transparent display (for this purpose, the scanned image and the DIC layer should be completely equal to each other in size).

Characteristics of the markup data will be described below in detail.

### 4-2-1. Overlay

Static and dynamic markup data can be considered as an "overlay" on a layer. This overlay can provide additional information of a paper document (hereinafter, referred to as document) or a part thereof or can specify an action associated with the document or a part of the document. The markup data may include contents which can be read by a person, but is often used to be invisible to a user and/or is mechanically readable. An example of an invisible markup is a pop-up menu for providing a source of an image and audio information when a user captures a specific image of a paper document through a transparent display.

### 4-2-2. Various Layers from Various Sources

A document (digital identity) may have plural overlays at the same time. The overlays can originate from various positions. The markup data can be generated or supplied by an author, a user, or another party. The markup data can be added to the document or built in the document, or may be separated and transmitted. The markup data can be found out at conventional positions (for example, positions of different file name suffixes in the same document). The markup data may be included in the search result of an area designated on a layer by a user (that is, an area designated on the raw digital identity) or may be found out through particular inquiries by the same search engine or different search engines. The markup data may be found out through the user context information or the document context information or may be found out using information induced therefrom. That is, the markup may be found out at a specific position on a layer (of a transparent display) even when the markup itself is not included in the digital identity.

Similarly to the ways in which a link of a conventional html web page is often built as static data in an html document, the markup may be generated to be static and unique with reference to a scanned image (or on the scanned image). However, the markup may be dynamically generated and/or applied. An example of the dynamic markup is information, which has been added to a document, including the newest stock price of a company mentioned in the document. An example of the markup which is widely used is translation information which can be automatically used in a specific language for plural documents or actions of documents.

### 4-2-3. Personal "Plug-in" Layer

A user can install markup data or sign a specific source thereof. Accordingly, it is possible to personalize the reaction of the system to execution of a specific module.

### 4-2-4. Keywords and Word Trademarks and Logos

Some elements of a document may have functionality or a specific "markup" associated with characteristics of a specific document instead of a position in the specific document. For example, like a logo and a trademark which can link additional information of a certain company, the same principle is applied to "keywords" or "key-phrases" in the document. Companies can register specific words associated therewith or wanted to be associated therewith and specific markups are attached thereto which can be used wherever the words are selected by a user.

Any word or phrase can have an associated markup. For example, regardless of when a user designates words "book", "book title", or "topics associated with a book", the system can a specific item to the pop-up menus (for example, link to an on-line book store). In some examples of the system, when words "book", "book title", or "topics associated with a book" are designated by a user, the system can refer to texts, user context information, document context information, and the like and the action of the system is changed depending on the accessibility to the keyword elements. In the examples, it should be noted that data designated from non-commercial texts or documents may cause a commercial transaction due to the markup.

### 4-2-5. User-supplied Contents

A footnote is another type of electronic information which can be correlated with a document. For example, a user can add an audio file including the user's opinion on a specific document as a sound footnote for search in the future. In another example of the multimedia footnote, a user can add a video or a photograph to a specific position of a document. The user supplies a footnote for the document and the system can correlate a footnote based on another source therewith. An important example of the user-sourced markup is a footnote written on a paper document as a part for proofreading, editing, or reviewing.

### 4-2-6. Contents Supplied from Third Party

The markup data can be supplied from a third party like another read of a document. An example thereof is community-management information on specific jobs and translation and explanation of voluntary workers, which are on-line discussion and reviews. Information from an advertiser is also an example thereof.

### 4-2-7. Dynamic Markup Based on Data Stream of User

By analyzing data acquired from a document by plural or all users of the system, the markup can be generated on the basis of activity and interest of a community. For example, there may be an on-line book store presenting "a person having enjoyed this book also enjoys ..." as markup data to users. The markup may have less anonymity and may inform a user who in a contraction list of the user has recently read this document.

### 4-2-8. Markup Based on External Event and Data Source

The markup is frequently based on an input from a combine database and a data source and an external event such as information from the public Internet or statistics collected by a local operating system. The data source may be further local and may provide user context information such as the identity of a user and the region. For example, the system can communication with a user's mobile phone and can provide a markup layer for giving an option of transmitting a document to a person having recently communicated with the user by phone.

### 4-2-9. Dynamic Markup Interacting with User

The markup can be merely statically identified by a user, displayed, and accessed with a user's touch but can dynamically interact with a user. A representative example thereof is a markup generated by an educational game program (data provider) with reference to a specific paper document (or raw digital identity). Preferably, an educational game program can provide questions to a user in the form of games on the paper document with reference to the user context information, the document context information, and the like in the database. For example, when the system analyzes the context of a specific user for a specific area of a specific English newspaper and blanks words, which have been most searched for in the corresponding page by users of a level similar to the specific user, on the paper document and provides the blanked paper document, the specific user can improve the word learning performance by enjoying the game of filling the blanks. In another game program, sentences in a document can be deleted from the uppermost to help the user improve speed reading ability. An educational game program can improve the learning performance of a user by providing the user with various types of markups on a specific page. In addition, the system can reinforce the user context information by analyzing the feedback history (interaction history) of the user while executing the game program and estimating variations in capability and interest of the user. The accumulated user context information may be reprocessed for the user or other users into an important source for generating extra contents (additional information).

Specifically, the dynamic markup may be produced by a produced with reference to a scanned image, but may be generated by a system service through the use of a system (artificial intelligence system) for analyzing data to automatically generate questions in an algorithm input by a developer on the basis of data generated by a data mining system. The generated dynamic markup interacts (feedback) with a user on the user's display (layer). The user may enjoy a virtual game with a computer or may enjoy a real-time game with another user while watching the same paper document. All data acquired by the system by the user's participation in the game can be recorded in the user's history information (data string), can be reprocessed by a web server and/or a database, and can be provided to other users (by a data provider) or can be used for personalization of the user in the future.

For example, a user overlaps a transparent display on a paper document while watching an English newspaper as the paper document and matches the English news paper with a layer. Thereafter, the user gives a specific game program execution command. Words with priority which have been most searched for by other users out of words in the English newspaper are blanked and the user can enjoy a game of filling all the blanks within a predetermined time. Alternatively, a game of deleting words at a specific speed sequentially from the uppermost for speed reading may be provided. Alternatively, a game of providing a voice pronouncing a word to children wanting to learn words or students studying foreign languages and searching for the word may be provided. Various types of games may be provided depending on characteristics of a curriculum or intentions of a developer. These games are not used only for the "educational" purpose, but can be produced for the purpose of guiding a user to immersion in a document and promoting an learning effect in most cases.

### 4-2-10. Markup Including Raw Data

The markups can be distributed in correlation with specific positions and segments in a layer. That is, in advance, each markup can be located at a position in a layer like a point, each point can be coded, and each code include (and call-match) raw digital identity. This method seems to be similar to a method of reproducing raw data of the entire scanned image in a layer and causing a user to select the raw data, but both methods are different from each other, in that the raw data in a predetermined range matched with a specific markup is selected by the system by allowing a user to select the specific markup. Preferably, these markups are not identified by a user, but may be identified in some cases. For example, when a user wants to capture a specific area while watching a paper document through a transparent display and the user causes a device to recognize a "capturing" mode, markups ups (set in advance so as to include or call image raw data within a specific range for preparation for capturing by the user) may be distributed in the layer visibly or invisibly. Thereafter, when the user drags an area, which has been selected while watching the paper document, with a finger, the markups corresponding to the trace of the finger are sequentially selected and image data within a specific range (for example, within a radius of 0.5 mm) included in the corresponding markup is displayed around the markup. These markups may be arranged (for example, one per 0.2 mm*0.2 mm) with regularity in a layer, but a producer (someone) may define a specific range (for example, one paragraph or one sentence) in advance and set a markup so as to indicate the specific range. Here, the raw data may be simple image data or may be data in various formats such as text data and audio data.

### 4-2-11. Markup for Providing Attribute information on All or Part of Document to System

The markup may be located at a specific position in a layer and may serve to provide attribute information on a specific object of a paper document (scanned image) to the system. For example, the markup may inform the system of attribute information on a specific question of a specific page of a specific mathematics workbook. This attribute information can inform the system in what category a question is, what the level of a question is, who has the copyright of a question, and the like. Preferably, this attribute information is identified as a specific code by the system so that the attribute information matched therewith can be found out by the system, and the system can use the searched attribute information as a source of a predetermined program. For this purpose, the attribute information has to be constructed by several field names and has to be stored in a database table of the system, and the stored attribute information is used as a source of a specific program in response to a user's request or under the control of the system. For example, it is assumed that a student selects an exercise in page 42 of a book "Standard of Mathematics" and then searches for questions of similar levels in the same category. Then, the system searches for the attribute information matched with the markup (code) selected by the student. (A system administrator (producer) has to classify all questions in addition to the corresponding question into several fields in advance and has to input property values for the fields. Examples of the "field names" include the book title, the levels of questions, the number of views, the number of recommendations, copyright holders of questions, whether to share the questions, formulas used for the questions.) The system can grasp the level of the question and the category of the question (for example, what part in calculus), and can selectively show questions of the level similar to the question selected by the user in the same category.

### 4-2-12. Markup for Inducing Specific Transaction

The markups which have been visibly or invisibly distributed in a layer may perform a function of inducing a specific transaction by a user's selection. For example, it is assumed that a user selects a specific area of a paper document to read relevant additional information while watching the paper document through a transparent display. Then, an invisible (or visible) markup is selected by the user and is transmitted to the system. The system may automatically drive a "security, authentication, and payment" module for the specific area selected by the user and may request payment, authentication, or the like to the user. In another example, when a user selects a specific mathematics question, a pop-up window may be displayed to execute a game related to the question.

### 4-2-13. Markup for Selecting Specific Area of Paper Document

When a user selects a desired area on a paper document while watching the paper document through a transparent display, the user may select the desired area by directly dragging the transparent display on the paper document, but may merely select a specific area defined in advance by a producer. When a user wants to select a question in a mathematics workbook, the user may select the question by directly dragging a layer, but may select a markup of one block correlated with the question. This method of selecting a predefined block is advantageous for a system executing an extra program because an object selected by a user can be clearly defined and recognized by the system.

### 5. Digital Identity Coordinator (DIC)

A DIC in the invention is a module (software) for causing a display to recognize a touched (input) coordinate, appropriately analyzing the recognized coordinate, and selecting markup data corresponding to a specific area in a paper document originally intended (selected) by a user when the user touches a transparent display to select and designate the specific area in the paper document in a state in which the user overlaps the transparent display on the paper document. The DIC may be logically considered as a function or a coordinate transformation module for appropriately analyzing a coordinate touched by a user.

More specifically, the DIC serves to newly allocate recognition coordinates of the transparent display in consideration of the physical size (the horizontal and vertical sizes) of a paper document grasped using the book identity recognized by a device and then to link to markup data corresponding to the (newly allocated) coordinate designated by the user's touch.

In other words, the DIC may be considered to serve as a "function" for newly matching absolute coordinates allocated to the transparent display with the markup data on the basis of a criterion (on the basis of the position of the paper document recognized by the device).

The DIC can be embodied by various routines in various examples and may be defined in various expressions. However, when a user touches the transparent display with a specific area of a paper document in mind while watching the paper document through the transparent display and means for serving as a tool for newly recognizing the user's touch (or an input signal) on the display is provided to accurately designate the markup data corresponding to an area intended by the user on the paper document, it should be considered that the DIC is activated regardless of the expressions or the realizing methods.

In the invention, for the purpose of convenience of explanation and intuitive understanding, the activation result of the DIC is assumed to be present like a sheet of paper visually identified on a graphic user interface and is referred to as DIC layer. However, this term is merely a conceptual expression for intuitive understanding of a person reading the invention, but it does not mean that a DIC layer is physically present or is graphically recognized by a user. The layer may be visible or invisible to a user, and the layer should have a transparent property regardless of the colors thereof when the layer is visible. The size (horizontal and vertical lengths) of the layer cannot be changed by a user and can be unilaterally determined by a system referring to the corresponding document context information by causing the system to identify the book identity thereof. Specifically, the DIC will be described below in more detail using oen of the aforementioned realization methods and expression methods.

### 5-1. Layer Coordinator

A user places a display on a paper document and sets the position of the layer in accordance with a predefined rule, after inputting book identity to a device. (Alternatively, the display recognizes the position of the paper document under the control of the device after the user inputs the book identity.)

At this time, a layer coordinator generates a transparent/semi-transparent digital layer (DIC layer) with reference to the physical size information of the paper document estimated from the signal and the book identity input to the display by the user.

The layer generated by the layer coordinator is activated in the display, the other space is deactivated, and the DIC allocates a new coordinate group to the activated DIC layer. That is, a digital identity indicator (DII: see the description below) is activated on the basis of the activated DIC layer, calculates the relative values between the new coordinate group and the coordinates of the display, and generates coordinates for construction of digital identity (markup data) in the future.

For example, when a user applies an action to a coordinate of 100, 100 on the display, the layer coordinator determines whether the coordinate is activated, and calculates and transmits the coordinate on the DIC layer to the DII when the coordinate is activated.

### 5-2. Digital Identity Indicator (DII)

The DII links (or reproduces) the corresponding digital identity (markup data) to the DIC layer.

The layer coordinator allocates new coordinates to the DIC layer in the display. For example, when the DIC layer is generated at a coordinate of 10, 40, the DII recognizes 10, 40 to be X, Y and constructs context information.

The DII requests a database for the corresponding to the digital identity on the basis of the relative coordinate. At this time, the method of linking the digital identity to the DIC layer is classified into a preprocessing method and a post-processing method.

In the preprocessing method, the construction of the digital identity is reproduced in a transparent form on the display in the same way as the shape of the original document on the basis of the coordinate information of objects (texts, images, sound files, and the like) stored in the database. This method has a demerit that a long time can be required for the reproduction process but has a merit that a rapid response can be expected after the processing.

In the post-processing method, (contrary to the preprocessing method), the digital identity is not reproduced and an object of the corresponding coordinate is searched for when a user gives a request. The post-processing method has a demerit that the database should be searched for each request, but has a merit that there is no cost for the reproduction process.

### 6. Identification Clue

The identification clues are clues exposed on the DIC layer. These clues are used when a user has to adjust the position of the layer so as to accurately overlap the layer with the paper document. These clues can be roughly classified into two types.

The first type of clue is a "part of a scanned image" of the corresponding page of the paper document (FIG. 6-140). A part of the scanned image of the corresponding page (one page or two pages) of the paper document is exposed on the layer. At this time, when an excessively-great image is exposed on the layer, there is a possibility of infringement of the copyright and thus the scanned image should be exposed in a range in which the copyright is not infringed. Regarding a "part of the scanned image", only a part of characters or images may be extracted from the original document and may be exposed on a transparent/semitransparent layer or the scanned image may be exposed in a state in which a part thereof is hidden. However, when the scanned image is provided as the identification clues, a "case in which the size of the display is smaller than the size of the paper document" can be considered. That is, when the size of the display is larger than the size of the paper document, only partial identification clues can be used to match the DIC layer with the paper document. However, when the size of the display is smaller than the size of the paper document, it is not desirable that the system administrator unilaterally determines an exposure range and provides the exposed part regardless of the size of the display. This is because the exposure area unilaterally determined by the system administrator may not be exposed at all on the display. That is, when it is intended to place the transparent display on a specific portion of the paper document and to match the layer with the specific part, there is no identification clue corresponding to the specific portion on the layer. In order to prevent this situation, it is necessary to determine the exposure range of the identification clues so as to correspond to the size of the display of the device. (Detailed description thereof will be described in "Method of Exposing Identification Clue When Display Size is Smaller than Paper Document Size".)

The second type of clue is the "layout" of the paper document. The "layout" means all identification clues with the positions and shapes of words and images can be estimated other than details of the paper document, such as font shapes, sentence lengths, fonts, line spacing, and positions and sizes of images. This layout can be generated with reference to the raw data and the context information when the system identifies the digital identity matched with the book identity. For example, the layout may include "horizontal lines" indicating positions of characters or sentences. The horizontal lines (FIG. 7-152) can be expressed in the form of "underlines", or the "underlines" may be numbered for the purpose of helping of a user's identification. That is, when the horizontal lines are numbered such as 1, 2, 3, ..., a user can identify the first line, the second line, .... Alternatively, the layout may include a "box" shape (FIG. 7-150) indicating positions of characters, sentences, or images. In this case, since the positions of characters or images can be easily identified, there is a merit that a user can intuitively adjust the position of the layer. In addition, the layout may include an outer "boundary" (FIG. 9-170) of the layer. The boundary may be merely a boundary of the outline of the paper document or may be a boundary indicating the outline of the texts.

### 7. Specific Action (and Module)

In general, a program, a module, or a logic means a routine, a program, a component, a data structure, or the like for performing a specific job or realizing a specific data type.

In the invention, a "specific action" includes the meaning of a "module" and "software" for performing specific functionality as described above and also includes all general actions which can be simply performed by a user such as selection, access, and default. Such a specific module may be locally accessed on a user device or may be remotely performed on a user system (for example, a web server) by remote processors connected thereto via a communication network. When the specific modules are performed by the remote processors, the modules (programs) may be located in one or more servers, or the modules may be locally located in the memory of the user device or the servers and may be connected to each other so as to perform functionality or a task.

The specific modules may be displayed as identification symbols (such as icons or symbols) provided on the display by a GUI and may be executed by a user's touch, but may be executed depending on the attribute information of data (digital identity) or document (book identity) or by derivation from analysis of the corresponding markups or contexts.

When the system uses the specific modules through the use of a specific application on the user device, the specific modules may be executed by allowing a user to merely touch icons through the use of icons (a drawing tool, an eraser, a question mark, a capturing tool, and the like) provided by the corresponding application. When the system is used on a web browser of the user device, the specific modules may be executed through the use of modules (which are provided at any position of the web browser through various routes and which are mainly provided as a menu bar at the uppermost) provided on the web browser. A new action or option suitable for the system may be provided through the use of a search engine of the system.

However, in order to satisfactorily use all the functions of the system, it is preferable that a specific application for the system be installed in the user device (in an on-device way or in a download way from a server).

The specific modules will be described below on the basis of "functionality". Regarding the specific modules for realizing the functionality, it should be considered that one or more functionalities can be connected and comprehensively (sequentially) can be realized to perform a task instructed by a user.

The first type of specific module is a "dictionary search" module. In a "dictionary" stored in advance in a data storage (memory or database) of a user system, position information of each keyword and contents (materials of various formats such as audio, image, text, and video) may be matched with each other through the use of a keyword mapping program which is a system service. The results of the program execution may be displayed in the form of markups such as highlighting or icons on the user display (more accurately, on the semi-transparent layer) before the user gives a module execution command and may be read by the user's selection, or the program may be executed after the user gives the module execution command and the results may be rendered on the display.

The second type of specific module is a "capturing" module. The capturing module is executed by extracting data corresponding to a specific area selected by a user from the original scanned image and the raw data in the form of images. At the time of capturing data in this way, the user may designate an area to be captured through simple dragging (like designation of an area using a mouse) or a trace of the user's finger may be filled with image data in real time. For example, when a user's touch is predefined to be recognized with thickness A and thickness B and the user sets an area to be captured like drawing with a finger while watching the paper document through the transparent display, data corresponding to the positions through which the finger passes are extracted as image data in real time and fills the trace (the inner space formed by thickness A and thickness B) of the finger. This gives a sense as if the user rubs a foggy glass (transparent display) so as to clearly visualize an object (paper document) below the glass and may provide an user-friendly intuitive interface as if the paper document below the transparent display is captured using the finger.

The third type of specific module is a "search module using a search engine". An object designated by a user while watching a paper document can be searched for through the use of one or more search engines connected via a communication network and the results can be provided to the user. Preferably, the search engine used in the system does not perform a search process using only the data (text, code, image, markup, and the like) corresponding to the selected area designated by the user, but performs the search process with reference to a part of the user context information and the document context information. This "reference" may be performed by the search engine itself or may affect the search results. For example, it is assumed that a user selects a word "beautiful" while watching a paper document. Then, the search engine can grasp from what context of what category of book the keyword originates using a part of the document context information of the user and can deliver an exact meaning to the user, or may grasp the current interest or the vocabulary level of the user using the user context information and may provide an arrangement of words which are helpful to the user in association with the word. In this case, the search engine can store and use more state information than most existing search engine for each individual user and the individual interactions with the search engine can be extended to a longer period and more searches than in the related art. At this time, a part of contexts may be transmitted to the search engine at the time of inquiry for search, may be stored in the search engine for functioning as a part of inquiry in the future, may be applied as a filter to the results of the search engine, or may be treated as a secondary keyword.

The fourth type of specific module is an "authentication, security, and payment" module. In consideration of the fact that the system uses "copyright writings" as a target, "payment" for reading and using the copyright writings has to be companied. Since authentication and security are necessary conditions for the payment, the system can have the authentication, security, and payment module. In general, the user's identity is identified using a serial number of a device. However, since there is a problem in reliability of the identified identity, the system can execute an extra "authentication" module for checking whether the user is an actual owner of the device and a "security" module for giving a right to use the system and an access right to the digital identity. Thereafter, the system can execute a "payment" module in situations such as a situation in which the user attempts to access information for which the user does not have the use right or in a situation in which the user purchases a specific item. For example, when a user scraps a part of a book, the system can grasp the user, can check whether the user has an access right to a part of the selected book, and can request the user for "payment" when the user does not have the right. In addition, the system can grasp information (copyright holder, publisher, and the like) for payment using the document context information and may distribute money paid by the user to the interested persons on the basis of a predefined criterion. For this purpose, the system can use one or more of billing information, subscription information, and device identifier information.

The fifth type of specific module is a "question and game generating" module. This module seems to be similar to the "additional information generating module" in view of functionality, but is different therefrom in a delivery way thereof and thus this functionality is separately described in the invention.

In consideration of the fact that main users of the system will be learners out of readers, the system needs to provide special services for "learners". That is, the system can provide contents to be learned in the form of questions to the users in consideration of the document context information of the paper document selected by the user or the user context information. This form of questions may be of a simple O and X type or may be a form of simply selecting and providing existing problems.

When a paper document is an "English newspaper", a question generator of the system may be activated in association with an area selected by the user or a portion selected under the control of the device out of the English newspaper to generate questions. The question generator may analyze the raw digital identity corresponding to the selected area of the English newspaper and may generate questions using a predetermined algorithm or may generate questions with reference the user context information and the document context information by further supporting a user interface. Preferably, the system may use a machine running algorithm, that is, artificial intelligence (AI), for this purpose. For example, the system can index keywords in the raw digital identity corresponding to the selected area of the English newspaper, and generate questions by selecting and blanking only words which have been most searched for by other users of a level similar to that of the user out of the keywords. Alternatively, the system may provide questions which are constructed with a difficulty level suitable for the user by selecting only words which the user does not seem to know with reference to the interaction history (user context information) of the user with the system. Moreover, the system may reprocess the questions generated in the aforementioned methods or the selected data (for example, keywords of the English newspaper) so as to be learned using a "game" by the user with reference to the corresponding raw digital identity. For example, the system may provide a game in which blanks of words which have been often searched for by other users are made to sequentially flicker and a user fills the flickering blanks with the given keywords within a predetermined time, unlike the method of selecting and merely blanking the keywords which have been often searched for by other users in the English newspaper. Alternatively, a user may simultaneously access the corresponding game program along with another user and may enjoy another type of game while watching the same paper document. Since this game program is more active than the existing methods of statically generating and providing questions to a user and can induce a user's participation, it is possible to enhance a user's learning performance and to cause the user's interest.

The sixth type of specific module is a "graphic operation" module. This module causes a user to operate the raw digital identity corresponding to a specific area selected by the user and displays the results thereof on a paper document as if the user directly operates the paper document while watching the paper document through a transparent display. More specifically, this operation method can be classified into two types. One type of method is a method of displaying a scanned image corresponding to a designated portion at the designated position when a user designates the portion to be operated, causing the user to operate the displayed scanned image with an operation tool while watching the scanned image, combining the non-designated portion with an image of the digital identity (scanned image), and storing the combined image. The other type of method is a method of causing a user to merely activate the operation tool without designating an area to be operated and displaying only the operation result other than the scanned image when the user selects a specific menu and operates a desired portion of the paper document (without designating a specific area). In this method, when only the operated result in the scanned image is exposed without exposing the original scanned image and the deleted portion of the scanned image while operating the scanned image is replaced with the same color as the margin of the paper document (or the margin of the scanned image) and is then displayed on the transparent display, the user can experience more virtual reality. This method allows the user to experience high virtual reality. For example, a user places the transparent display on a paper document, matches the layer therewith, selects a "pipette" menu which is a menu (production tool) button at the uppermost of the display, and puts the pipette on a position of the paper document while watching the paper document. Then, a dynamic graphic variation occurs as if characters (or images) of the paper document are suctioned into the pipette. This is made to be possible by setting the graphic operation results of the scanned image to dynamically move. At this time, when the blanks (places in which characters or images have been present) generated while suctioning characters (or images) into the pipette are filed with the same color as the margin of the paper document in real time, the user experiences virtual reality as if the user operates the paper document itself. The graphic operation results are combined with the scanned image (the entire book, the entire page, or a part thereof) identified using the book identity and are stored by the user's selection, whereby it is possible to provide a user with a more convenient and intuitive interface in comparison with the existing methods (methods of scanning an image and individually operating graphics of a desired area for combination with the original image).

### 8. Authentication and Security

The identity of a user is known in most situations. However, the identity of a user often becomes "anonymous" and is identified using only a serial number of a capturing device. In general, the system can be used to personalize a system and needs to have more detailed knowledge of a user so as to carry out specific activity and transaction in the name of the user.

For example, a user device may be associated with a mobile phone account by incorporating the user device into a mobile phone or using other methods. For example, a user device having a transparent display can be associated with a mobile phone account by inserting a sim card associated with the phone account into the user device. Similarly, the user device may have a credit card or other payment cards built therein or may have a functional facility for a card associated therewith. The user device can be used as a payment token and a payment transaction can be started by allowing the user device to recognize a paper document.

For example, a user device can be associated with a specific user or account through a process of recognizing symbols or texts associated with the user or the account. The user device may use biological information by scanning a user's fingerprint. A user device having an audio capturing element can match voice patterns of a user and can identify the user by requesting the user to utter a predetermined code or phrase.

### 9. Method of Causing System to Recognize Book Identity of Paper Document

The system can identify book identity in various ways. The methods of allowing the user system to identify book identity of a paper document will be specifically described below.

The first method is a method of allowing a user device and a user system to recognize an identification symbol printed on a paper document. In this method, a change is not applied to an existing publication process and the system is made to recognize the identification symbols printed on books. Examples of the identification symbols include a book title, an author name, an edition, a publisher, an ISBN number (FIG. 2-210), and a barcode (or barcode number). These identification symbols are printed and distributed so as for a user to identify the book identity of books in the existing publication system. In order for the user system to identify the book identity, the identification symbols (the book title, the author name, and the like) and scanned images of paper documents have to be matched with each other (with the book identity given thereto) and have to be stored in the database of the system. This method has a merit that a change does not need to be given to the existing physical world and the method can be applied to documents published and distributed in the past, but has a demerit that the method is not a user intuitive interface.

The second method is a method of printing new identification symbols in documents to be newly published by publishers or documents to be produced (edited) and printed on a monitor by someone (other than publishers) for each page and causing a user device to recognize the printed identification symbols. This method can be realized when the system is commercialized and is invented to cause the system to more easily recognize the book identity. In this method, codes generated by software (which is provided by the system) for generating a specific code (a barcode, a signature, or the like) are printed together at the time of printing documents. For this purpose, when a publisher generates identification symbols and prints at a specific position of books, the system has to give book identities of the printed identification symbols and to match the corresponding digital identities (and the document context information) therewith. Then, how to match the digital identities with documents to be produced (edited) and printed by a user other than a publisher may diversify. An example of the matching method in most consideration of convenience to a user is a method of automatically generating and printing an identification symbol at a specific position of a paper document when a user pushes a "print" button after producing (editing) an electronic document while watching a monitor of a computer and setting an environment, that is, setting a layout (font size, font shape, line spacing, layout, and the like), to be finally printed on a sheet of paper, uploading all data (and document context information) to be printed on the sheet of paper in a predetermined server, and matching the identification symbol with the data. In this case, the identification symbol can be printed at a predefined position such as the first page or the cover of a document or the bottom end of each page. The method of printing new identification symbols on paper documents has a merit that it is possible to provide a user with an intuitive interface, but has a demerit that the method can be applied to only documents to be newly generated and a certain change should be applied to the physical world.

The third method is a method of searching for the book identity by recognizing a part (characters, images, and the like) of a paper document using recognition means (such as a scanning element, a camera, an optical lens, or a voice recognizer) of a user device. This method is designed to overcome realistic difficulties of applying a change (change in publication or printing processes) to the physical world as in printing an identification symbol on a paper document, or causing users to individually input the identification symbols (book title, author name, publisher, ISBN number, and the like), or separately printing the identification symbols on paper documents. In this method, the system is made to recognize details (characters, images, and the like) of a paper document using the recognition means of a user device. (The method of recognizing a part of a paper document using recognition means and searching for a digital copy identical thereto is known in the art and detailed description thereof will not be repeated in the invention.) This method has a merit that any change does not need to be applied to a paper book in the publication and printing processes and a convenient and intuitive interface can be provided to a user, but has a demerit that each user device should be provided with an optical recognition device. Moreover, as the method of causing the system to recognize a part (characters, images, and the like) of a paper document, a method of causing a user to select and recognize an area of a paper document can be used and a method of causing a user to find out a predefined area on a paper document and causing a user device to recognize the area can be used. For example, when a rule of recognizing the final sentence at the right-bottom end of a paper document is predefined between a user of the system and a system provider (producer), the system can more easily and accurately find out the book identity in comparison with the aforementioned method (method of causing a user to recognize an arbitrary area of a paper document). Alternatively, the page number may be located at an icon (graphic) fixed to the transparent display and a specific area may be scanned with a scan-enabling area of the transparent display. In this case, the "area predefined between a producer and a user" may be immediately prompted by the system. For example, when a user selects a paper document and gives a ready signal, the system can prompt an instruction such as "loudly read the first word of the page" or "scan the first sentence of the page".

The fourth method is a method of causing a user to recognize an "area predefined" between a system administrator (producer) and the user so that the system can rapidly and accurately find out matching information when recognizing a part (details) of a paper document using recognition means (a scanning element, a camera, an optical lens, or the like) of a user device. For example, when a rule of scanning the right edge of a page with a scan enabling area of the user device is predefined, the system can more easily identify the book identity (than the method of selecting and scanning an arbitrary area of a paper document with the device and causing the system to search for a document identical thereto) using the rule as a clue. Alternatively, a method of adjusting the position of the transparent display so that the page number of a paper document is located at an icon (graphic) fixed to the transparent display and scanning a specific area of the paper document with a scan enabling area of the transparent display may be used. For this method, the system has to store data corresponding to a point to be scanned in the paper document in advance.

### 10. Method of Allowing System to Acquire Scanned Image (Raw Data) of Paper Document

The system can acquire a scanned image of a paper document using various methods. First, in case of paper documents printed and distributed by a publisher, original data (markup) of documents distributed in the past is generally stored for the preparation of situations such as an "out-of-stock situation". The system can easily apply the invention to "documents distributed in the past" by acquiring the markups. It is not difficult to acquire raw data of documents to be distributed in the future by publishers. However, ordinary persons (students, office workers, and the like) do not read only "documents published by publishers". Occasional prints, auxiliary leaning matters, and reports in schools are individually produced and edited by users through the use of a computer monitor instead of "publishers". The invention can also be applied to these documents. Desirable methods thereof will be described below. For example, when documents are produced and edited using a specific application (module) provided from the system and a "print" button is finally pushed, markup information (information of all identifiers printed on a sheet of paper, such as font size, font color, line spacing, and details) printed on a sheet of paper are transmitted to a predetermined server by the application (module). That is, a user can smoothly use the system by producing and editing a document in the same way as printing something on a sheet of paper in the past. At this time, the "predetermined server" may be a web server commonly used by system users or may be a dedicated web server (for example, iCloud) to which an access right is given to only a specific user.

### 11. Method of Registering One or more of Digital Identity Corresponding to Specific Book Identity, DIC Module (DIC Layer), Identification Symbol to be Exposed on DIC Layer, and Data Source of Threshold Level or higher for Identification

### 11-1. Data is generated and registered by a system service (data provider).

One or more of the digital identity, the DIC layer, the identification symbol, and the data source of a threshold level or higher are generated from the scanned images (raw data) of a specific paper document acquired by the system via various routes by a system service (data provider such as a web server) of the system. Thereafter, the generated data is matched with the paper document and the book identity is given thereto. At this time, it should be noted that the system service may be executed on a web server or may be executed in a local system of a user device.

The aforementioned description related to "Markup" can be referred to for the method of causing the system service to generate the digital identity.

The method of causing the system service to generate an "identification symbol" may require size information of a display of the user device in many cases. When the size of a paper document is the A4 size, the size of the user display is a mobile phone size, and the system service selects and provides an identification symbol (particularly, a part of a scanned image is provided as the identification symbol) to the user device, a user may view an area not including an identification symbol (for example, a part of the scanned image) while moving the DIC layer. Since the excessive exposure of the scanned image may cause a problem with the copyright, the user has difficulty in matching the DIC layer with the paper document using a part of the scanned image as a clue. Therefore, when generating an identification symbol, the system service needs to refer to the size information of the display of the user device. Accordingly, when the user device recognizes the book identity and transmits the resultant information to the system service, it is preferable that a certain clue (for example, a serial number of the device) be transmitted together so that the system can know the size of the user display. When the system senses the size of the user display (client device) in this way, the system can extract a part of the scanned image or a part of the layout of the scanned image with reference to the scanned image (or the raw data) of the paper document and can provide the extracted part to the DIC layer of the user.

### ("6. Identification Clue" and "17. Method of Exposing Identification Clue on DIC Layer" will be referred to for details thereof.)

Using the method of causing the system service to generate the DIC module (DIC layer), the system can know the physical size (the size in the real world) of a specific paper document by identifying the book identity of the paper document or acquiring a scanned image thereof. For this purpose, the system has to store physical size information of the paper document for the book identity in advance or has to the physical size of the scanned image (or the raw data) acquired by the system.

The method of causing the system service to generate the "data source of a threshold level or higher for identification" may vary depending on the rule predefined between the system administrator (producer) and the system users. When a rule of scanning the first character of a page is predefined, the system service only has to extract and store only the first character of the page. When a rule of generating the data source based on prompting of the system is predefined, the system has to immediately extract a solution to the prompting of the system from the scanned image (raw data) of the paper document. In addition, there is a method of allowing the system to search for the book identity even when a user freely selects an area of the paper document. This method is known in the art and thus detailed description thereof will not be repeated.

### 11-2. A server receives and registers the digital identity generated by a user or a producer.

"4-2. Extended Digital Identity", "14. Method of Allowing User to Generate Markup Data", and "15. Method of Registering Markup Data in System" will be referred to for detailed description thereof.

### 12. Method of Allowing User to Scan Paper Document with User Device and to Use System

This method is a method for a paper document of which book identity is not given, that is, is not stored in the data storage of the system. In this method, when a user scans all or a part of a paper document with a scanning element of a user device, the scanned image is transmitted to a specific server of the system at the same time as ending the scanning, the system server (data provider) generates one or more of the digital identity, the identification symbol, and the DIC layer (in the same way as in the method according to claim 2) at the same time as the system server receives the scanned image and reproduces (or matches) the generated data on the DIC layer of the transparent display. The step of allowing the user to acquire the paper document using the scanning element should be considered to be replaced with the step of (A) in claim 1. Here, when the scanning element is present in the form of a plane scanner on the transparent display and the transparent display does not move from the time point at which the user first performs the scanning, the user does not need to know the position of the DIC layer and thus the step of (B) in claim 1 can be considered to be replaced. The scanned image transmitted by the user in this way can have new book identity given by the system and can be stored in the data storage of the system so as to be used by other users in the future. The method of performing a specific action without displaying the scanned image in a state in which the scanned image is merely stored in the memory of the device, that is, is not transmitted to the specific server of the system may be considered to exceed the scope of the invention. However, since the "system" in the invention does not mean only the server connected to a communication network and is a term including all of the user device and the servers connected to the user device via the communication network, the scanned image acquired by the user device can be considered to be temporarily stored in the user device. Even when the scanned image is not stored in the user system but is deleted after the scanned image is used, it should be considered that the scanned image (raw data) stored in the user system is used once by the user and virtual book identity is once given to the user.

### 13. Method of Allowing User to Read Digital Identity Associated with Specific Paper Document (or a part thereof) on System Application Screen

A user can selectively view digital identities in various arrangement criteria such as identifiers of main generating agents, object names, time information, popularity order, hit number order using an arrangement menu provided on the system application screen by the user or under the control of the system. For example, the user can cause the device to recognize the book identity after overlapping the transparent display on the paper document (or a part thereof), and can select one of various menus (application tools) on the screen provided by the system application after matching the DIC layer with the paper document. For example, the user can select a specific person from a friend list registered in advance on the application and can read markup data (of the entire paper document or the selected area) generated by the selected person in a state in which the selected area is designated or not designated on the layer in order to read markup data generated by someone and associated with the entire paper document (or a part thereof). For example, the user may search for an object name associated with the entire paper document or a part thereof (selected area). That is, the user may designate a specific area of a specific page while watching the paper document and may search and view only a "video" associated with the designated area, may search for and view only a relevant "text document", or may selectively view only "writings" generated in association with the area (selected area) by another user. In addition, the user can arrange and view the objects generated in association with the entire page and a part thereof by generators (or producers) including the user in various criteria (for example, popularity order, hit number order, generation time order) using columns given to a table of a database of the system as key values

### 14. Method of Allowing User to Generate Markup Data

In this method, a user of the system may read markup data generated by another user using a specific application provided by the system or may generate and transmit markup data to the system. Preferably, a system application has to define objects in advance and has to provide the defined objects to any position of the application screen as graphic symbols of menus (options) in the way and shape which can be easily viewed and used by the user. The predefined objects (records) are identified as graphic symbols at any position on the screen by the user and data selected and directly generated by the user are attribute values of the columns constituting the objects. For example, it is assumed that the user clicks a "memo attachment" menu (tool) provided by the system application, designates a position of the DIC layer, and writes characters or images in a memo pad. Then, the "memo attachment" menu is a property value of the column (field name) of object name and the characters or images written to the memo pad by the user are property values of the column (field name) of data. That is, in order to generate markup data associated with a specific paper document, the user can be considered to merely select a menu (object) provided by the system application and to generate only property data in a specific form provided by the application. Other columns (field names) constituting objects (records) will be described below. First, as described above, "object name", "data property", and "position on the DIC layer" can be mentioned. The information of "position on the DIC layer" can be used to arrange data generated in the past by the user at appropriate positions in the future and can also be used for another user's search when the additional information (objects) is shared with another user. For example, the objects may include a column of "generation time". This column can be used to read objects generated by the user on a specific date or at a specific time and can also be used as sources of various applications (for example, arranging English words in the time order) presented in the invention. As the columns, there may be identifier information (for example, id or device serial number) for generating the objects or book identity information of the paper document identified by the system. Various columns may be used depending on application request.

The types of objects constituted by various columns will be described below as "object names".

Several representative examples will be described below. These examples are intended only for describing the concept of the invention, the number of examples is great, and the invention should not be limited to the examples mentioned in the invention. Preferably, all software functions of editing, operating, and generating electronic documents through the use of a computer interface should be considered to be included in the object names.

A first example is "writing" generated in association with the entire paper document or a part thereof by the user. In this example, the user can select a menu (graphic symbol) indicating "writing" and can perform the writing. (In fact, the writing menu can have a lot of lower setting menus for realizing the writing such as pen thickness, font shapes, and font colors). In this case, the user can simply generate writings of the entire page on the DIC layer by merely drawing underlines and stars, writing small characters in the margin, and the like on the DIC layer while watching the paper document. In some cases, the user may want to make writings on a specific selected area so as to exceed the range of the (given) DIC layer. That is, a writing space may be insufficient. In this case, the system application can allocate the area other than (or including) the area selected (dragged or drawn) on the layer by the user as the writing space and can set the allocated space so as to be infinitely extended under the control of the user. This method enables adding a great amount of data to the selected area on the paper document without restricting a space. (At this time, the "area selected" by the user will be an attribute value of the column (field name) of "position on the DIC layer".) Here, the "writing" may be various multimedia data such as links, videos, and texts which are added by the user as well as the touch trace of the user. The portions displayed on the DIC layer through the dragging or drawing of the user should be considered to be attribute values of the column of "position on the DIC layer". In order to easily find out the portions, the "selected area" has to be identified by the user.

A second example is a "stamp" put on the entire paper document or a part thereof. When a user makes a specific mark (icons including a question mark, a quotation mark, and an exclamation mark) in an area selected by the user while watching the paper document, the system can show the user the areas having the same mark or the entire page. For example, when a rule of putting a question mark on a difficult question is predefined, the user can put the question mark on the difficult question while solving the workbook. When the question marks are put while watching various paper documents, questions or ranges difficult to the user can be extracted and arranged in the time order, the difficulty order, and the like in the future. Information on the stamps put on various paper documents by the users of the system is transmitted to the system and serves as important sources for estimating interest, taste, capability level, and statistics of the users.

A third example is a "memo pad" for attaching additional information to a part of a paper document. (This example is an example which is currently widely used in computer interfaces and thus detailed description thereof will not be repeated herein.)

### 15. Method of Registering Other Markup Data in System

When the system is used on a web browser, a producer can generate markup data such as highlight on a paper document (for example, on the transparent DIC layer overlapped on the scanned image after the scanned image is displayed on the monitor) using a specific markup language (for example, xml and html) which is compatible with the web browser provided by an operating system of the user device with reference to the corresponding paper document. The generated hypertext has an Internet address allocated thereto, is stored in a database of a specific web server as a table including several columns (for example, book identity and identifier information), and is automatically moved to a web page matched with the corresponding book identity under the control of the system at the same time as the user inputting the book identity to the user device. Since the rendered web page has several hyperlink items, the system has to have a hyperlink table including the book identity and positions (coordinates) of the hyperlink items on the layer as column values for the purpose of access to the web page. At this time, it should be noted that the hypertexts to be used in the system should be characterized in that the sizes should not be automatically adjusted under the control of the user or the system unlike the hypertexts normally read through the web browser and the sizes should be equal to the physical size of the paper document.

### 16. Method of Matching Paper Document and DIC Layer

### 16-1. Method of Allowing User to Move Paper Document to match with DIC Layer

A user may move a paper document located under the transparent display to match the paper document with a layer (of which the position or the size cannot be changed by the user) fixed onto the display with reference to the layer.

### 16-2. Method of Allowing User to Designate Boundary of DIC Layer

A user may display (designate) a boundary (FIG. 9-170) or an edge (FIG. 8-160) on a transparent display while watching a paper document through the transparent display so that the boundary or edge of the layer is matched with the boundary or edge of the paper document.

### 16-3. Method of Allowing User to Move DIC Layer to Match with Paper Document with reference to Identification Clue (FIGS. 6-140, 7-152, and 7-150) Exposed on DIC Layer

This method is more effective when the size of a display is smaller than the size of a paper document. The identification clues may be always exposed on the layer or may be exposed only when the layer is moved by the user. That is, when a lot of details of the paper document are exposed as the identification clues on the layer, a problem with "copyright infringement" may occur. However, when the amount of identification clues exposed is excessively small, there is a problem in that the amount of clues to be referred to by the user is small. Therefore, the "method of exposing identification clues only when the layer is moved" is used to expose the identification clues as much as possible within a range in which the copyrights are not infringed. That is, all or partial identification clues of a scanned image are exposed only when the layer is moved by the user, and the identification clues are not exposed when the layer is not moved. This is because a user has a difficulty in appropriately reading and understanding the identification clues (all or a part of the scanned image) in a state in which the layer is moved.

### 16-4. Method of Matching Layer not Having Exposed Identification Clue

A method of automatically positioning a layer by locating specific symbols (for example, boxes and stars as the GUI of a display in a predefined area (predefined area of a paper document visible through the display) is used. More specifically, it is assumed that a box is present as a graphic symbol on the display. The small box shape (FIG. 5-160) is moved with the user's touch. This box is overlapped on the predefined area of the paper document. When a rule of putting a box on the "page number" (FIG. 5-161) of a paper document is predefined, the user will put the box on the page number of the paper document while watching the paper document visible through the display. Then, the user device can adjust the position of the layer so as to locate the page number of the digital identity (scanned image) at the position of the box. When this method is used, the user does not have to recognize the layer and does not have to expose a particular identification clue on the layer. The "predefined area" may be an area in which the "page number" is written, may be a "start point of a text", or may be various predefined areas. The "predefined area" may be a "fixed" area which is recognized in advance by a user of the system or may be a "variable" area prompted by the system. This method is characterized in that a user cannot recognize the presence of the layer, which can enhance a user's intuitive interface.

### 16-5. Method of Allowing User to Move Position of DIC Layer with Guidance of System

A user may easily adjust the position of the layer (with the guidance of a specific symbol) by displaying a moving distance and a moving direction (velocity) of the transparent display sensed by a motion sensing element of a device using a specific symbol (for example, an arrow (FIG. 13-180)) after the device recognizes the position of the paper document in the transparent display (after the device is located in accordance with a predefined rule). This method accompanies a troublesome process in comparison with the fifth method, but may be considered to be an interesting medium for adjusting the position of the layer.

### 16-6. Method of Allowing System to Automatically Adjust Position of DIC layer using Motion Sensing Element of Transparent Display

When a motion sensing element is included as hardware in the transparent display, it is possible to adjust the motion of the layer using the motion sensing element.

Specifically, when a user allows a display to recognize the position of a paper document, the user device identifies the position of the paper document. Thereafter, when the user sends a "motion start" signal and the display is moved to an area desired by the user on the paper document, the layer only has to be moved in the moving distance and direction (that is, velocity) sensed by the motion sensing element. At this time, in order to allow the user to recognize the position of the paper document, the user intentionally display (designate the edge or boundary of the paper document, move the layer to match, move a specific symbol to overlap the specific symbol on a predefined area, or the like) the position of the paper document on the transparent display, or the display already recognizes the position of the paper document (by locating a fixed symbol of the transparent display on the page number of the paper document, matching the lower-right corner of the display with the lower-right corner of the paper document, or the like). That is, a start point is designated and the device adjusts the motion of the layer by the moving distance of the display on a book. At this time, it should be noted that the layer should be moved in the moving direction and distance (speed in some cases) sensed by the motion sensing element.

The motion sensing element can be embodied in various forms and several examples thereof will be described below.

A first example is a granule/surface texture sensor.

Two parallel granule/surface texture sensors are provided to detect deformation of the surface of a paper document. Such a type of input sensor is generally used to capture Braille texts. The parallel surface texture sensors can determine the angle of the sensors from the relative velocity/distance moved by the parallel sensors.

A second example is a gesture (motion-based).

A gesture can be detected by observing data passing through a scanning head and monitoring a variation in the motion sensor or by mechanical motion sensing means.

A third example is observation of optical data.

By observing a surface of data passing through an optical element, a relative motion can be calculated in the same way as an optical mouse does. The device can determine the gesture of the user performed on the transparent display by analyzing the relative motion. For example, an optical system may detect the relative motion by observing a pattern on the surface of a paper document. Alternatively, the absolute position can be detected by checking an absolute position code on the surface of the paper document.

A fourth example is a gyro/acceleration-based motion sensor.

When an acceleration sensor such as an acceleration meter for sensing a variation in speed or direction is provided, the control gesture can be determined. Alternatively, a gyroscope (particularly, a chip-ring laser gyroscope is suitable for this job) can be used to detect a motion and a gesture.

A fifth example is a mechanical unit (such as a ball point or a roller).

A rolling element or a ball similar to a ball point of an ink pen which is optically encoded may be provided. An optical sensor detects the motion of an element which is optically encoded while moving the ball along a paper surface.

For example, a flow of ink electrically charged in the ball point is measured to record the relative motion. Electric charges which are detected by a probe are given to the ink flowing in the ball. A current sensing probe built in the housing of the ball point detects the flow of ink on the ball. When plural probes are provided, the motion of the ball and the substantial motion passing through the surface can be estimated from the direction of the ink flow. The electrically-charged ink can serve as a general-purpose input and recording device. Here, when the user performs a recording operation using the ink, a motion can be input and recorded. A boundary of the housing of the ball or a guard ring in the vicinity thereof can be used to discharge the charged ink so as to allow the sensor to sense only the charged ink flowing from a receiver. Alternatively, an optical flow or a motion flow of the acquired scanned image may be used.

### 16-7. Method of Matching Layer with Paper Document through Transparent Display having plane Scanner

In the invention, the "plane scanner" means a device having a hardware "scanning unit" built in a display and employing the principle of overlapping the display on a scanning target, applying light to the scanning target, and reading the reflected light. The plane scanner can be classified into a type of two dimensionally arranging plural light sources and light-receiving elements on one layer out of layers in the display and simultaneously scanning a two-dimensional area and a type of placing a physical space from the display and allowing a scan line header to pass through the physical space. However, both have only a difference in elements constituting the scanning unit, but are similar to each other, in that the scanning unit is built in the display, a scanning target is pushed from the upper side, light is applied to the scanning target, and the reflected light is received. Scanners for scanning a scanning target having a two-dimensional rear using other methods in addition to the aforementioned two types are referred to as "plane scanner" in the invention.

When a display having a plane scanner is placed on a paper document and a predetermined area of the paper document is canned, the scanned image is transmitted to the user system and the image of the original document having the scanned image as a part thereof can be searched for. Thereafter, the system can estimate the position of the scanned image in the selected image of the original document and can adjust the position of the layer of the transparent display. For example, when the motion sensing element is provided, the device can sense the motion of the display and can move the layer in the same direction and at the same speed as the sensed motion. Alternatively, for example, even when a user changes the position of the display, the display may scan a target (may scan the target, may scan the target when the target moves, or may scan the target when the target moves and then stops), the system may compare the scanned image with the original stored in the system, and the device may adjust the position of the layer.

When a scanning element (such as a camera, a scanner, or a CMOS optical lens) is disposed in the transparent display (in a part of an area in which the transparent display comes in contact with the paper document, for example, on the side surface in FIG. 10-300) and the transparent display scans the paper document in real time and transmits the scanned image to the system so as to grasp the position at which the transparent display is located in the paper document, the device may compare the transmitted scanned image with scanned images (raw digital identity) stored in the system and adjust the position of the layer. This method is most convenient to users out of the aforementioned methods, because the users cannot recognize the layer itself and the users do not have to move the DIC layer.

### 16-8. Method of Matching Layer with Paper Document When User changes Layouts (font size, line spacing, font, font shape, and the like) of Paper Document Distributed with Identification Symbols Printed to Generate Paper Document

For example, a user may edit and modify layouts (font size, line spacing, font, font shape, and the like) of a document, which has been printed and distributed in a specific layout type by producers (for example, publishers, groups, or persons), on a monitor of a user computer and then may print the document. At this time, when a paper document is generated in a state in which details of the original (distributed) document are not changed and only the layouts (environment setting) are changed, the user can find out the digital identity of the original document by causing the device to identify the identification symbol of the original document (to recognize the ISBN number or to scan all or a part of the changed paper document) and can newly allocate the coordinates of the layer by changing the setting (document context information) of the layouts of the digital identity by intentionally operating the identification clues appearing on the layer (reducing the font size, arranging the line spacing, and the like with reference to the paper document). Alternatively, for example, the system may estimate how the scanned image of all or a part of the "modified paper document" is modified from the raw digital identity of the original document. That is, the system can analyze the scanned image of all or a part of the "modified paper document", separate the scanned image into the raw data and the context information, and find out the digital identity having the same raw data. The system can compare the found digital identity with the scanned image, change the context information of the digital identity to the different context information, and present the contact information onto the layer.

### 17. Method of Exposing Identification Clue on DIC Layer

For example, when a method of allowing a device to identify the book identity of a paper document and receiving data in which the exposure range of the identification clues to be exposed on the layer is predetermined is used and the size of the display is smaller than the size of the paper document, no identification clue may be invisible by allowing a user to locate the display on a specific portion of the paper document and to move the layer. That is, the identification clues may depart from the range of the display. When the display size of the device of the user is not constant, the system has to provide the identification clues in consideration of the size of the display.

Three types of methods of providing identification clues are used.

A first method is a method of transmitting the display size information at the time of causing the device to recognize the book identity information of the paper document and providing the identification clues corresponding to the transmitted display size (in which the exposure range is predetermined and formatted). In this method, regarding criteria used for the system administrator to predetermine the exposure range corresponding to the display size, a minimum area (FIG. 14-190) only has to be selected so that the identification clues are exposed even when the display is located at any position of the paper document as illustrated in FIG. 14 (Since this is the minimum area, a greater range can be exposed as long as the problem with copyrights can be avoided). The criterion for selecting the minimum area cannot be clearly derived using a "mathematical formula". This is because a producer can discretionarily set the criterion in consideration of necessary details (problem with copyrights and convenience to a user) and there is no clear criterion. Referring to FIG. 14, when the size of one page of the paper document is divided by the size (width m*length n) of the display, the minimum area can be set to appear so as to make the identification clues visible even when the display is located at any position of the paper document as illustrated in FIG. 14-90. Since the display can be rotated for use, it is necessary to prepare edited raw digital identity (image) in which the minimum area (FIG. 15-191) to be exposed has been determined by dividing the entire page into areas of (width n*length m) as illustrated in FIG. 15 (This edited digital data will be rendered by a "display rotation" signal by the user device in the future).

A second method is a method of executing a corresponding "extraction module" with reference to the display size information of the user device of the user context information after the user allows the system to identify the book identity and then the system selects the corresponding digital identity. The extraction module is a formula determined in advance by a producer and is equal to the aforementioned method of determining the exposure range in the methodical aspect, and description thereof will not be repeated. The aforementioned two methods have only a difference in that the extraction is pre-processing or post-processing.

A third method is a method of always displaying the identification clues of a specific range or greater on the layer. More specifically, the system can extract and display a predetermined range of the digital identity corresponding to an area (area in which the layer is exposed through the display) in which the display illustrates the layer even when the layer is moved or stopped by the user. In this method, the exposed area corresponding to the display size of the device is not predetermined by the system administrator but the system senses the motion of the layer and transmits corresponding data in real time. For example, the system can always provide a half of the display as the identification clues however the user moves the layer. Since clues of a constant range (for example, a half of the display is always filled with the identification clues) are always provided, there is a merit that the user can easily match the layer with the paper document. For example, the clues of a constant range may be made to appear only when the user moves the layer and not to appear when the user does not move the layer, or the clues of the constant range or greater may be made to appear when the layer is not moved.

### 18. Method of Recording Interaction History of User with Markup Data on System

The intentional or non-intentional interaction history of the user with the markup data can be recorded on (stored in) the system. When a user designates a mathematics question, reads similar questions, and executes the payment module if necessary, all relevant information serves as good sources constituting the user context. That is, since the system knows the information that the user merely selects a specific question and selects "similar questions", the system can estimate the level and interest of the user and may provide questions effective (suitable) for the user and relevant materials to the user using the estimated level and interest as a clue.

For example, the interaction (feedback) history of the user with a dynamic markup (game) on a specific paper document serves as a good source for estimating specific capability of the user and estimating capability and habits of the user. For example, when a user interacts with a specific English game while enjoying the specific English game and particularly often gives wrong answers for words having a certain "spelling" and is weak to a certain pronunciation, the system may generate and provide questions based on the weak points of the user in real time or may provide relevant materials helpful to the user. Through the repeated game, the system can grasp what ability of the user is improved, what ability of the user is insufficient, at what level the ability of the user is in comparison with other users, and the like. Moreover, the system may introduce a game (or a program) or other programs suitable (effective) for enhancing the insufficient ability of the user.

The accumulated information (user context information) informs the system of variations in concern, interest, and ability of each user and thus the system may select and provide information effective (suitable) for each user before each user gives a request. The system can generate and update information required for the entire system by accumulating the context information of each user. The information generated and updated in this way is advantageous for all users of the system.

### 19. Method of Allowing two or more Users to Access System through System Application and to Share (chat) Data in Real Time

When two or more users access the system and want to separately have a talk with each other, the system can allow only the users to have a talk with each other. For example, a user of the system may want to have a talk with a friend (friends) about a specific paper document while watching the specific paper document together. Then, the user can select two or more users wanting to have a talk with the user and property data generated by the users (one party) (using a system application) can be reproduced on the screens of the other user(s) participating in the talk in real time. The users participating in the talk prepares the same paper document and open a specific page (paper document) designated by one user, and the steps of (A) and (B) in claim 1 are performed through the use of the system. Thereafter, one user participating in the talk generates property values of objects using a specific menu (for example, a writing tool) provided by the application while watching the paper document. At this time, the generated property values are reproduced on the screens of the other users participating in the talk in real time (that is, in real time while the property values are generated). Preferably, the other users participating in the talk can generate property values in real time and the generated property values can be shared on the screens of the users. However, in some cases, only one user participating in the talk may be allowed to generate property values and the other users may merely consume the generated property values. That is, the users participating in a talk can discretionarily make a rule of a talk such as "to whom out of the users participating in the talk to give the right to generate property values". The property values are associated with predefined objects provided by the system application and the objects may include a "voice" item. That is, when a user device is provided with an element capable of recognizing a user's voice, the users can read the display (for example, writings) on the screen provided by one user generating the property values and can also directly hear the generator's voice, which will be more useful. For example, when the "paper document" is not carried off-line, the system may provide the "scanned image of the paper document" acquired in advance, that is, the raw data, to the screen of the user not carrying the "paper document" and may request for one or more of authentication, security, and payment in some cases.

This method will be described below in more detail with reference to two examples.

In a first example, it is assumed that User A of the system has a difficulty in solving Exercise No. 2 of page 32 in the "Standard of Mathematics" and inquires User B for the exercise. User A having accessed the system application through the use of its own device checks that User B does not access the system in a friend list registered by User A, and requests User B to access the system by a call. User A attempts to has a "chat" with User B having accessed the system. Then, the system allows Users A and B to have a talk with each other by voice and Users A and B have a talk by voice using the system application. User A requests User B to open page 32 in the "Standard of Mathematics". User B carrying the "Standard of Mathematics" opens page 32, overlaps a transparent display of its own device on page 32, and matches the DIC layer therewith. Thereafter, User B informs User A of a ready state. (User A has to match the DIC layer with the paper document just like User B). Then, User A having known that User B is ready selects a "writing" menu (lower menus such as colors and thicknesses are actually present) which is one of various menus (objects) provided by the system application and starts direct writing about Exercise No. 2 on the screen of the transparent display overlapped on Exercise No. 2. That is, in the same manner as a person circles a specific numeral on a book, writes a solving process, draws underlines at the time of solving a mathematics question, User A writes on the transparent display as if the user directly writes on a sheet of paper on which Exercise No. 2 is printed. Then, the position and the object name (the menu, that is, a writing tool, selected by the user out of the menus provided by the application) of data generated by User A on the layer are recorded, the data is transmitted to a specific server of the system, and the system transmits the transmitted data to User B in real time. Then, the property data is reproduced on the screen of User B having received the data (since the application predefined for the object is installed therein) in the same way as in the screen of User A. That is, Users A and B experience virtual reality as if the opponent solves the question together near by while watching their own books (the "Standard of Mathematics").

In a second example, the method can be used in class rooms of schools. When all students and a teacher carry devices in which the system application is installed, respectively, the teacher can give a comment to the book of each student without writing details on a blackboard or designating a position of a specific paper document by voice. At this time, the teacher may set the system so that the property data generated by the teacher is shared by only the students requiring personal instruction or may be set the system so that the property data is shared by all the students. Alternatively, the property data may be generated by someone having a right to generate property data as well as the teacher and may be reproduced on the screens of the students in real time. When a certain student give a question at class, the teacher can give the right to generate the property data to the student and then the other students can view the property data (for example, writing) generated by the student and reproduced on the application screens in real time but cannot participate in the generation of the property data.

### 20. Method of Selecting Specific Area of Paper Document to Execute Module through the use of Transparent Display

In the method of designating a "specific area", a user may select and display an area to be particularly used (such as dictionary search and capturing) on a transparent display while watching a paper document through the transparent display, the user may merely select and designate an area predefined in the document by a producer, the user may select one of sections preset and predefined by selecting a visible/invisible markup, the system (such as a producer or a program) may select the entire document in some cases, and the system may unilaterally select a selected area with reference to attribute information of the document (document context information) and the user context information. When a selected area is designated in this way, the system executes a specific module to process data corresponding to the selected area.

The method of executing a specific module will be described below.

For example, when the system is executed in a user device through use of a web browser or a specific application, the system application can provide a production tool for the user GUI of the system. The production tool is provided as a menu bar at a position on the screen in which the application is executed and the user can select a desired "module" from the menu bar. For example, when a user designates a selected area on the transparent display while watching a paper document and then designates a specific module of the menu bar, the specific module is executed on the selected area and the result is displayed. Alternatively, when a user selects a specific module from the menu bar, a mode in which the specific module can be executed may be set and the specific module may be executed at the same time as the user designating a selected area.

For example, a specific module may be induced and executed through markup or context analysis with respect to (or depending on) data (raw digital identity) or attribute information of the document. Alternatively, a visible or invisible markup may be analyzed with a control command of a specific module.

### 21. Field to be Recorded When Specific Module is Executed on Selected Area

The system can realize useful functionality by acquiring user records for a selected area which is designated by a user while watching a paper document, actions such as execution of a specific transaction based on the selection of a visible or invisible markup, details of the paper document, and "additional information" including the position and the like in the document. The history information stored in this way is advantageous for the user and other users. More specifically, the data corresponding to the selected area in which the specific module has been executed has extra fields added thereto (or only fields) and is stored (recorded) in the database of the user system. Objects (records) constituted by several field names (columns) serve as important sources for generating the "user context information" and the "document context information" of the system. The generated user/document context information can be processed into other information (extended context information) and can provide users with specific functionality associated or not associated with the document, such as providing the users with additional information, in the future. Specifically, the system can grasp the interest and concern of a specific user through the use of the acquired user/document context information. Alternatively, the system can estimate a variation in ability of each user through the use of the acquired information. For example, when the object data to be subjected to the dictionary search, the time, and the book identity to which the objects belong are recorded whenever a user searches a dictionary for an English word (that is, whenever the user interacts), the system can estimate the ability and level of the user for the English words and can provide other words helpful to the user on the basis of the estimated ability and level, by grasping how frequently the user searches for the same English word, for what word the user mainly searches a dictionary, and in what level of book the user searches for the English words, (and the like). The system can estimate the English ability of the user on the basis of the words for which the user frequently searches and can provide additional information such as words, sentences, and questions which other users of similar levels have most searched for or referred to.

The system may provide advertisements or purchase applications which reflects the user's recent interest by grasping what documents the user mainly watches and whether the user searches for relevant additional information. Specifically, advertisements in the system can be associated with individual words or phrases and the user can reflect the user's interest and can be provided to the user by allowing the user to select the words or phrases or by considering the selection history (user context information) in the past. This method is considered as a feedback for effectiveness of advertisements by advertisers.

The system presents a new module of reward to advertisers and commercial sellers. A commercial seller, a publisher, or an advertiser having a copyright corresponding to a specific area of a paper document can make income thanks to selection and purchase of users of the system.

The system may generate "statistics" for a user by acquiring the user/document context information. For example, the system can measure popularity of publications on the basis of the "statistics". Factors such as the stay time in a specific paper document or the number of hits of a specific paper document help a publisher to determine publications to be published in the future. When a smaller table of contents in an existing book is proved to be very popular, the book will deserve to publish. It is possible to observe feedbacks of active readers on the basis of user's activities and publishers may give appropriate rewards to authors on the basis of the observed feedbacks. A popular object can be selected on the basis of the statistics of reader activities and advertisers may pay a premium rate for the popular object so as to open advertisements.

The system can grasp information on a user's habit or interest on the basis of the "additional information" and may use the information as sources for appropriate marketing for readers (for products or contents).

In the system, the user context information and the document context information can generate a large amount of extended context information, and the system can provide a large amount of information and customized information to the users on the basis of the extended context information.

Several representative examples of a field name (column) to be added to the objects will be described below in detail.

A fist example is "identifier information" indicating a user who interacts with the system using the device. In most situations, the identity of a user is known. Sometimes, the identity of a user often is identified to be "anonymous" and is identified using only a serial number of a capturing device. In general, since the system can be used to personalize a system and a specific action and transaction can be performed with a user's name, it is very important that the system recognizes the "identifier".

A second example is the "position" of an object (data corresponding to a selected area of a user) in the digital identity.

The position of an object helps to find out the original document to which the object having a specific module performed thereon belongs in the future, to estimate the position of the selected area in the original document, and to contextually understand information. When a user records position information in the original document at the time of capturing and storing a specific English sentence, it is possible to know the position at which the stored sentence has been captured and thus to contextually understand the information.

A third example is the "object name" indicating what action (module) a user performs on an object.

The object name indicates what module the user performs on a selected area and serves as an import key value in generating the powerful extended context information.

Accordingly, for example, the system can estimate the user's English ability on the basis of the history of the words for which a specific user has searched a dictionary and the system may estimate the user's concern and interest on the basis of the sentences which the user has mainly captured. A user can arrange and view data pieces captured up to now or may arrange and view the words found from a dictionary.

A fourth example is the "time" at which an action is performed on an object. The system can acquire information on at what time a user mainly learns on the basis of the time, can arrange and show details which the user has learned on a specific date at the time of reviewing the details, and can estimate a variation in word learning performance of the user by analyzing the time at which the user has repeatedly searched for a specific word.

A fifth example is the "book identity" of a document to which an object belongs. The system can select and show the words which other users having read the same paper document as a user have often searched for on the basis of the book identity, and can estimate the user's concern and interest. For example, the system may provide sources required for payment of the user by gasping copyright information of a paper document on the basis of the identified book identity.

A sixth example is the "attribute information" associated with an object. The raw data of the digital identity matched with the book identity identified by the system is a target on which a specific module will be performed and does not include any attribute information. However, an object which is all or a part of a document may include attribute information indicating characteristics thereof. The attribute information as the aforementioned markup data can be mainly built in or added to the digital identity and can be recognized by the system. For example, when a user selects a specific question of a specific page of a certain mathematics workbook and the system intends the user to be provided with similar (relevant) questions, the system can grasp the attribute information (indicating to what category the question belongs, what the level of the question is, what formula is used, and the like) of the question on the basis of a (visible or invisible) markup (which may be a specific code) selected together with the specific question and can provide the user with questions (questions in which the same formula is used, questions of similar levels, and questions belonging to the same category) associated therewith.

### 22. Method of Allowing User to Select Object Reproduced (selected and prepared or matched) on DIC Layer

Markup data is stored in the form of a table including specific columns at the time of storing the markup data in the data storage of the system, regardless of the main agents for generation and the generation methods. Accordingly, when a user transmits markup data to the database of the system through the use of an object-defined system application, an extra field is added to each object. The objects stored in a table including several columns can be selected and arranged by the user and can be displayed on the DIC layer screen of the user. For this purpose, first, the user selects a paper document, overlaps a transparent display on the paper document, matches the DIC layer therewith, and causes the system to recognize several conditions. For example, a specific section (for example, Exercise No. 2) is selected on the DIC layer or an ID of a friend is selected from a friend list. Then, the system can find out an object corresponding to the conditions input by the user from the DB table. That is, when a user selects a specific section (for example, Exercise No. 2) on the DIC layer, the system can find out several objects having the same attribute value as the book identity and the position information input to the system by the user. That is, the objects having the same attribute value as the book identity input by the user at the time of starting the system mean objects generated by other users on the same paper document as the paper document selected by the user. However, since the amount of objects may be too great to open the objects, the condition of the area (for example, Exercise No. 2) desired by the user is added to the selected objects and the objects can be selectively opened. That is, the user gives two conditions of the "book identity" of the paper document and the "position on the DIC layer" to the system, and the system finds out objects having the same attribute values as the attribute values of the "book identity" and the "position on the DIC layer" which have been identified by the system and distributes the objects onto the DIC layer. (There is no object having the same attribute value as the attribute value of the column of the "position on the DIC layer". Accordingly, the system has to prepare a certain criterion in advance. For example, an object is selected when areas of a specific threshold value or greater are overlapped.) When a system table includes the "identifier" as a column, the user can selectively view only the objects generated Friend A on a specific paper document. In addition, when the system table further includes the "object name" as a column, the user may selectively view only the "memo pad" out of the objects generated by Friend A on the specific paper document. For example, when a user selects and reads Specific Paper Document A, the user may wonder comments added by other users about a certain portion (for example, Exercise No. 3) of the paper document. Then, the user drags "Exercise No. 3" on the DIC layer (the book identity is has been already identified by the system and is thus skipped) while watching the paper document and gives a search command to the system. Then, the system can provide Document A with all the comments added by other users about Exercise No. 3. Thereafter, when the user feels inconvenient due to the excessively large amount of comments, the users having added the comments can be arranged in the descending order in mathematics ability (this information is provided from the context information stored in the system) and can selectively view the comments (or writings or memo pads) added by the users about Exercise No. 3.

It will be easily understood by those skilled in the art that the method of allowing a user to selectively view objects generated by other users on the basis of the columns of the system table can cause more situations as the number of column values of the system table becomes larger, and thus description of more examples will not be made.

### 23. Authentication, Personalization, and Security

In most situations, the identity of a user is known. However, the identity of a user often is identified to be "anonymous" and is identified using only a serial number of a capturing device. In general, the system can be used to personalize a system and needs to have more detailed knowledge of a user so as to carry out specific activity and transaction in the name of the user.

One useful function of the functions which can be performed by the system is to store the records and the document contexts of the user, which are associated with the action performed by the user while watching the paper document and additional information, which is associated with an action performed as a result, including the action. The history stored in this way is advantageous for the users and the system. The chapter "Context" will be referred to for details thereof.

For example, a user device may be associated with a mobile phone account by incorporating the user device into a mobile phone or using other methods. For example, a user device having a transparent display can be associated with a mobile phone account by inserting a sim card associated with the phone account into the user device. Similarly, the user device may have a credit card or other payment cards built therein or may have a functional facility for a card associated therewith. The user device can be used as a payment token and a payment transaction can be started by allowing the user device to recognize a paper document.

For example, a user device can be associated with a specific user or account through a process of recognizing symbols or texts associated with the user or the account. The user device may use biological information by scanning a user's fingerprint. A user device having an audio capturing element can match voice patterns of a user and can identify the user by requesting the user to utter a predetermined code or phrase.

### 24. Method of Displaying Module Execution Result

The module execution result may be displayed to be overlapped with the objects selected on the layer of the transparent display or in the vicinity thereof, or the module execution result may be displayed in an area other than the layer. For example, as illustrated in FIGS. 17 and 18, the module execution results (FIG. 17-102 and FIG. 18-107) can be displayed in the area other than the layer. For example, In the method of executing the capturing module by designating a selected area while watching a paper document through the transparent display, the user can designate the selected area as if the user intuitively "draws with a finger". At this time, when the display is touched with a finger (or various means such as a touch pen capable of displaying something on the screen) like drawing a figure, the user's touch can be recognized in predetermined thickness and shape and a scanned image corresponding to the same area as the trace drawn on the display can be set to fill the space through which the finger passes (107-4 in FIG. 19) in real time. This method gives a sense as if the user rubs a foggy glass located on the paper document) so as to clearly visualize the paper document (below the glass) and may help to realize a more intuitive interface.

Alternatively, when a user device is allowed to arbitrarily adjust a transparent portion of the display, the user may open the module execution result at a position desired by the user. When a user sets a portion of the transparent display to be a transparent portion, puts a paper document below the transparent portion, matches the DIC layer therewith, and designates a selected area to execute the specific module, the results may be displayed on an opaque portion (a non-transparent portion of the display) designated by the user. This method can be very usefully used in a situation in which the results have to be widely spread.

## Claims

1. A method of digitizing a paper document, the method being used in a transparent display or a user system having an air gesture function and a beam screen function, the method comprising steps:
(A) causing the user system to identify book identity of the paper document through the use of a user device (client device);
(B) adjusting the position of a DIC layer so as to overlap the DIC layer and the paper document with each other by a user or under the control of the user system in a state in which the transparent display overlaps with the paper document (or a part thereof) or the beam screen is projected onto the paper document;
(C) reproducing (select and prepare or match) raw digital identity, which is a part of digital identity matched with the book identity, on the DIC layer by the user or under the control of the user system in a state in which the raw digital identity is not displayed on the transparent display (or the beam screen) and/or generating or selecting and reproducing (select and prepare or match) extended digital identity (markup data), which is a part of the digital identity matched with the book identity, on the DIC layer by the user or under the control of the user system;
(D) selecting a specific area (or object) of the digital identity reproduced (selected and prepared) on the DIC layer by the user or under the control of the user system so as to perform a specific action of the user system; and
(E) displaying the result of the step of (D) on the display of the user device.

2. The method according to claim 1, further comprising a step of causing a system service of the user system to generate or acquire two or more of a scanned image (or raw data), digital identity, a DIC module (DIC layer), an identification clue exposed onto the DIC layer, an identification symbol for uniquely identifying the paper document, and a data source of a threshold level or greater and matching the generated or acquired information with the book identity of the paper document.

3. The method according to claim 2, wherein the system service is a web service which is carried out by one or more web servers.

4. The method according to claim 2, wherein the scanned image is acquired by a user device of a specific user and is transmitted to the user system, and
wherein the system service generates two or more of the digital identity, the DIC module (DIC layer), the identification clue exposed onto the DIC layer, the identification symbol for uniquely identifying the paper document, and the data source of a threshold level or greater and matching the generated or acquired information with the book identity of the paper document with reference to the scanned image at the same time as acquiring the scanned image.

5. The method according to claim 2, wherein the method of causing the user system to acquire the scanned image (or raw data) of the paper document is to print the paper document through the use of a system application predetermined to upload markup information (raw data) to be printed on the paper document to a specific server of the user system at the time of allowing the user of the user system to print the paper document.

6. The method according to claim 2, wherein the digital identity is generated by the system service (data provider) of the user system or is generated by someone and transmitted to the user system.

7. The method according to claim 6, further comprising steps:, for use in a transparent display or a portable user device (client device) having an air gesture function and a beam screen function in the method of allowing someone to generate the digital identity,
(a) causing an arbitrary user to identify the book identity of the paper document through the use of the user device;
(b) adjusting the position of the DIC layer so as to overlap the DIC layer and the paper document with each other by the user or under the control of the user system in a state in which the transparent display is overlapped on the paper document (or a part thereof) or the beam screen is projected onto the paper document;
(c) causing the user to generate property data of an object on the DIC layer using the system application predefined for the object with the user device; and
(d) transmitting the generated property data to a specific server of the user system by the user or under the control of the user system.

8. The method according to claim 7, wherein the object is defined in an extra field, the extra field is one or more of "an object name", "a position in the DIC layer", "a property data generation time", "the book identity of the paper document", and "a property data generator".

9. The method according to claim 7, wherein for use in real-time conversation between two or more users connected via a specific server of the user system, property data generated by one user is reproduced and displayed in real time on the DIC layer of an application screen of the other user.

10. The method according to claim 9, wherein the property data includes sound data including voice of the one user.

11. The method according to claim 1, wherein the step of (A) includes a step of causing the user device to recognize the identification symbol for uniquely identifying the paper document or the data source of the threshold level or greater required for uniquely identifying the paper document using a user interface (for example, a keyboard, a mouse, a scanner, or a touch screen) or reading means (for example, a barcode reader) of the user device and causing the user system to identify the book identity.

12. The method according to claim 11, wherein the method of causing the user device to recognize the data source of the threshold level or greater for uniquely identifying the paper document includes capturing an area on the paper document at the threshold level or greater with a scanning element having scanning capability and imaging capability in the user terminal or capturing a specific area of the paper document predefined between a system administrator and the user.

13. The method according to claim 12, wherein the specific are of the paper document predefined between the system administrator and the user is prompted to the user under the control of the user system.

14. The method according to claim 12, further comprising a step of, when the user system senses the captured data to be a modified document in which setting of layouts (for example, font size, image position, font, and line spacing) is changed from an original document (scanned image to which the book identity has been given from the user system), grasping layout setting information from the image of the modified document acquired by the user system, modifying the original document to be equal to the modified document, and generating markup data or a DIC layer (DIC module) on the basis of the modified data.

15. The method according to claim 1, wherein the step of (B) includes causing the user system, which has received the image captured by the scanning element, to grasp the position of the transmitted image in an original document (a scanned image identified by the book identity) and adjusting the position of the DIC layer so as to overlap the scanned image with the corresponding part of the original document.

16. The method according to claim 15, wherein the method of causing the user system to receive the image captured by the scanning element includes causing the scanning element to capture an image in real time or whenever the transparent display moves under the control of the user system and transmitting the captured image in real time.

17. The method according to claim 1, wherein the step of (B) further includes causing the user system to provide an identification clue on the DIC layer so that the position of the DIC layer is adjusted to be matched with the paper document by the user.

18. The method according to claim 17, wherein the "identification clue" is one or more of a part of the scanned image and a layout mark of the digital identity.

19. The method according to claim 17, wherein the method of providing the identification clue includes causing the user system, which has received the size information of the transparent display, to provide the identification clue of which an exposure area is determined in advance and which is matched with the received information to the DIC layer or to execute a data extraction module matched with the received information, that is, of which the range or capacity of the exposure area is set, on the raw digital identity to display the extracted data on the DIC layer.

20. The method according to claim 19, wherein the method of receiving the size information of the transparent display includes, when the transparent display with a size of (m*n) is rotated and changed to a size of "n*m) by the user, transmitting the fact of rotation to the user system in response to a rotation command signal from the user or through the use of the transparent display having sensed the rotation.

21. The method according to claim 17, wherein the method of providing the identification clue includes causing the user system to sense the position of the DIC layer exposed on the transparent display, to extract the identification clue of a specific reference value or greater for the corresponding area in real time, and to display the extracted identification clue on the DIC layer.

22. The method according to claim 17, wherein the method of providing the identification clue includes displaying the identification clue only when the DIC layer moves by the user or under the control of the user system.

23. The method according to claim 1, wherein the step of (B) includes a step of modifying the DIC layer and/or the corresponding original document (the scanned image and the raw data) by causing the user to match an identification clue provided from the user system (corresponding to the book identity recognized by the user device) with the paper document with reference to the paper document when the paper document is a modified document in which the layout is modified by the user.

24. The method according to claim 1, wherein the step of (B) includes a step of causing the user system to provide the fixed DIC layer onto the transparent display so as to match the DIC layer with the paper document by causing the user to match the specific edge of the transparent display with the specific edge of the paper document in accordance with a predefined rule.

25. The method according to claim 1, wherein the step of (B) includes a step of causing the user system to make the user identify the boundary of the DIC layer and causing the user to move the boundary to match with the boundary of the paper document.

26. The method according to claim 1, wherein the step of (B) includes a step of causing the user system to recognize the position of the paper document (on the transparent display) by causing the user to overlap the paper document with the transparent display so as to match a specific area of the paper document with a specific symbol of the transparent display in accordance with a rule predefined between a system administrator and the user and causing the user system to adjust the DIC layer using the recognized position as a clue.

27. The method according to claim 26, wherein the rule predefined between the system administrator and the user is prompted to the user by the user system having identified the book identity.

28. The method according to claim 26, wherein the method of causing the user to overlap the paper document with the transparent display so as to match the specific area of the paper document with the specific symbol of the transparent display in accordance with the predefined rule includes causing the user to overlap the specific symbol (for example, a box shape), which is movable by the user's operation on the transparent display, on the specific area (for example, a page number) of the paper document.

29. The method according to claim 26, wherein the method of causing the user to overlap the paper document with the transparent display so as to match the specific area of the paper document with the specific symbol of the transparent display in accordance with the predefined rule includes causing the user to adjust the position of the paper document and/or the transparent display so as to overlap the specific symbol (for example, a box shape) fixed onto the transparent display (non-movable by the user's operation) on the specific area (for example, a page number) of the paper document.

30. The method according to claim 1, wherein the step of (B) includes a step of causing the user system, which has recognized the position of the paper document on the transparent display, to adjust the position of the DIC layer so as to match with the paper document, causing a motion sensing element of the transparent display to sense a subsequent motion of the transparent display, and controlling the DIC layer so as to move to correspond to the sensed motion or guiding the user to move the DIC layer.

31. The method according to claim 30, wherein the method of causing the motion sensing element to sense the motion includes one or more of a method of using a granule/surface texture sensor, a method of detecting a gesture, a method of observing optical data, a method of using a gyro/acceleration motion sensor, and a method of using a mechanical unit (for example, a ball point or a roller).

32. The method according to claim 31, wherein the method of guiding the user to move the DIC layer includes a step of causing the user system, which has sensed a moving distance and a moving direction of the transparent display, to display a specific symbol (for example, an arrow) indicating the moving distance and the moving direction and guiding the user to move the DIC layer using the displayed specific symbol as a clue.

33. The method according to claim 1, wherein the method of generating the markup data under the control of the user system in the step of (C) includes causing the system service of the user system to generate the markup data with reference one or more sources of device identifier information, user context information, document context information, and a data stream of the user in addition to the scanned image (or raw data) of the paper document.

34. The method according to claim 1, wherein the markup data in the step of (C) is generated to perform a specific function and is identified by the user or is read only mechanically without being identified by the user.

35. The method according to claim 1, wherein the markup data in the step of (C) is generated in correlation with a specific position of the document (the scanned image or the paper document) or a specific position and/or segment of a text, is generated on the basis of characteristics (document context information) of the document, or is generated on the basis of an external event and data source.

36. The method according to claim 1, wherein the markup data in the step of (C) performs one or more functions of a function of providing the user with additional information of a part or all of the document, a function of providing the user system with attribute information on a part of all of the document, a function of including raw data in a specific range, a function of inducing a specific transaction, and a function of designating a selected area of the paper document (the scanned image).

37. The method according to claim 1, wherein the markup data in the step of (C) is a dynamic markup interacting with the user.

38. The method according to claim 37, wherein the dynamic markup performs an educational game function.

39. The method according to claim 1, wherein the method of selecting a reproduced (selected and prepared or matched) object on the DIC layer in the step of (D) includes causing the user system to select the object having an attribute value equal to (corresponding to) a condition (an attribute value of a specific column) presented to the user system by the user or causing the user system to select the object using presentation of two or more columns as key values by the user in the selected objects.

40. The method according to claim 1, wherein the method of designating the selected area (or object) on the DIC layer in the step of (D) includes one of a method of causing the user to directly designate an area and a method of designating the selected area under the control of the user system.

41. The method according to claim 1, wherein the method of reproducing or selecting the digital identity corresponding to the designated selected area (or object) includes causing the user system to transform the position information (coordinate) of the point designated on the transparent display by the user through the use of a layer coordinator included in the user system and to then select and reproduce the digital identity, which corresponds to the coordinate, located on one or more servers.

42. The method according to claim 1, wherein the specific action in the step of (D) performs one or more functions of an access function, a default function, a search function, a capturing function, a scrapping function, a copy function, a search function using a search engine, a dictionary search function, and an authentication, security, and payment function.

43. The method according to claim 1, wherein when the specific action is performed in the step of (D), the user is caused to directly designate one of options (menus) provided from the user system to perform the specific action or the specific action is performed under the control of the user system.

44. The method according to claim 1, further comprising a step of recording an interaction history of the user with the user system in a data storage of the user system under the control of the user system.

45. The method according to claim 44, wherein the interaction history of the user with the user system includes one or more information pieces of the time at which the specific action is performed on the area (or object) selected by the user or under the control of the user system in the digital identity, the raw data corresponding to the selected area, the object name, the property data of the object, the position of the selected area (or object) on the DIC layer, the book identity of the paper document, and the device identifier information.

46. The method according to claim 44, further comprising a step of processing (generating) the data recorded on the data storage into extra information required for the user system by the system service and providing the extra information to the user or other users of the user system.

47. The method according to claim 1, wherein the step of (D) includes a step of utilizing one or more of billing information, subscription information, and device identification information stored in the memory when the specific action is performed.

48. The method according to claim 1, wherein the step of (D) includes a step of causing the user system to restrict the specific action so as not to perform the specific action on data of a threshold level or greater in a specific criterion (for example, range, capacity, and time) when the specific action is performed on a copyright writing.

49. The method according to claim 1, wherein the method of displaying the result of the step of (D) on the transparent display of the user in the step of (E) includes, when the user's touch is set in advance so as to be recognized in a specific thickness and a specific shape by the user or under the control of the user system, displaying the reproduced digital identity corresponding to a space (a locus generated as a continuous space with the specific thickness and the specific shape), which is generated on the transparent display in response to the user's touch, along the user's touch (locus) in real time.

50. The method according to claim 1, wherein the method of displaying the result of the step of (D) on the transparent display of the user in the step of (E) includes, when the user is able to freely adjust a transparent area and an opaque area on the transparent display, activating the DIC layer in only the transparent area, deactivating the DIC layer in the opaque area, and displaying the result of the step of (D) at the point selected by the user or under the control of the user system in the deactivated opaque area.

51. The method according to any one of claims 1 to 50,
wherein the control of the user system is guided by analyzing one or more of user context information, document context information, extended context information, markup data, raw data, processing data, a data string, and a result value using a search engine or is guided by causing the user to select a visible or invisible markup reproduced on a layer.

52. The method according to any one of claims 1 to 51,
wherein the user system is connected to a communication network including one or more servers and the digital identity is locally located in the one or more servers or in the user system.

53. A user system comprising means for performing the method according to any one of claims 1 to 52.

54. A system comprising:
a device having a beam screen function and an air gesture function of recognizing a user's hand movement on a beam screen projected onto a paper document;
the user system according to claim 53; and
a coupling unit that couples the device to the user system.

55. A system comprising:
a transparent display that is overlapped on a paper document;
the user system according to claim 53; and
a coupling unit that couples the transparent display to the user system.

56. A computer program comprising computer-readable command words for performing the method according to any one of claims 1 to 52.
